(19) Europäisches Patentamt
European Patent Office
Office européen des brevets

(11) **EP 2 920 979 B1**

(12) **FASCICULE DE BREVET EUROPEEN**

(45) Date de publication et mention de la délivrance du brevet:
**14.08.2019 Bulletin 2019/33**

(21) Numéro de dépôt: **13801670.4**

(22) Date de dépôt: **15.11.2013**

(51) Int Cl.:
*H04R 3/00* *(2006.01)*    *G01S 3/802* *(2006.01)*

(86) Numéro de dépôt international:
**PCT/FR2013/052749**

(87) Numéro de publication internationale:
**WO 2014/076430 (22.05.2014 Gazette 2014/21)**

(54) **ACQUISITION DE DONNÉES SONORES SPATIALISÉES**

ERFASSUNG VON RAUMKLANGDATEN

ACQUISITION OF SPATIALISED SOUND DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2012 FR 1260898**

(43) Date de publication de la demande:
**23.09.2015 Bulletin 2015/39**

(73) Titulaire: **Orange**
**75015 Paris (FR)**

(72) Inventeurs:
• **PALACINO, Julian**
**22310 Plestin Les Greves (FR)**
• **NICOL, Rozenn**
**22450 La Roche Derrien (FR)**

(74) Mandataire: **Cabinet Plasseraud**
**66, rue de la Chaussée d'Antin**
**75440 Paris Cedex 09 (FR)**

(56) Documents cités:
**EP-A1- 1 551 205**     **EP-A1- 2 449 795**
**WO-A1-2012/072798**     **US-A1- 2004 032 796**
**US-A1- 2010 211 387**

• PULKKI ET AL: "Directional Audio Coding in Spatial Sound Reproduction and Stereo Upmixing", CONFERENCE: 28TH INTERNATIONAL CONFERENCE: THE FUTURE OF AUDIO TECHNOLOGY--SURROUND AND BEYOND; JUNE 2006, AES, 60 EAST 42ND STREET, ROOM 2520 NEW YORK 10165-2520, USA, 1 juin 2006 (2006-06-01), XP040507936, cité dans la demande
• Harald Viste ET AL: "ON THE USE OF SPATIAL CUES TO IMPROVE BINAURAL SOURCE SEPARATION", Proc. of the 6th International Conference on Digital Audio Effects, 8 September 2003 (2003-09-08), XP055453426,
• Joan Mouba ET AL: "A SOURCE LOCALIZATION/SEPARATION/RESPATIALIZATION SYSTEM BASED ON UNSUPERVISED CLASSIFICATION OF INTERAURAL CUES", Proc. of the 9 th Int. Conference on Digital Audio Effects (DAFx-06), 18 September 2006 (2006-09-18), XP055485322,

EP 2 920 979 B1

**Description**

La présente invention concerne le domaine des technologies de prise de son et des technologies de traitement audio associées.

Elle concerne en particulier, mais non exclusivement, un procédé de traitement de données sonores issues d'une scène sonore tridimensionnelle capable d'extraire une information de position spatiale de sources sonores. Elle trouve des applications aussi bien pour la prise de son spatialisée dans le cadre de services conversationnels, que pour l'enregistrement de contenus audio 3D (par exemple concert, paysage sonore, etc).

Différentes méthodes de prise de son spatialisé sont connues. Certaines cherchent à saisir les informations exploitées par le système auditif (technologie binaurale par exemple) tandis que d'autres décomposent le champ acoustique de façon à restituer une information spatiale plus ou moins riche qui sera interprétée par l'auditeur (technologie ambisonique par exemple).

Une première méthode consiste en une prise de son stéréophonique, comme présentée dans le document Joan Mouba ET AL: "A SOURCE LOCALIZATION/SEPARATION/RESPATIALIZATION SYSTEM BASED ON UNSUPERVISED CLASSIFICATION OF INTERAURAL CUES", Proc. of the 9th Int. Conférence on Digital Audio Effects (2006-09-18). Les différences de phase et/ou de temps, et d'amplitude entre des signaux issus de deux microphones sont exploitées afin de recréer des stimuli constituant une approximation grossière de l'écoute naturelle. Ces signaux sont restitués sur une paire de haut-parleurs toujours placés face à l'auditeur et alignés sur le plan horizontal. Dans une telle configuration, toute information provenant de l'arrière de l'auditeur et toute notion d'élévation sont perdues. Afin d'enrichir l'arrière de la scène sonore, de nombreuses solutions ont été proposées. En particulier, de telles solutions consistent généralement en une augmentation du nombre de capteurs visant les directions recherchées. On peut également prévoir un matriçage des signaux stéréophoniques afin d'enrichir l'arrière de la scène sonore. De telles solutions ont donné naissance aux systèmes quadriphoniques, 5.1 et 7.1.

Cependant, la prise de son stéréophonique est toujours limitée au plan horizontal frontal, ou horizontal dans le cas des extensions multicanaux de types 5.1. En d'autres termes, dans le meilleur des cas, en coordonnées sphériques, elle n'est capable d'identifier que l'information d'azimut des sources sonores (les coordonnées des sources dans un plan horizontal x-y), sans pour autant pouvoir identifier leur information d'élévation.

Une deuxième méthode consiste en une prise de son binaurale. La technologie binaurale permet une captation et une restitution imitant une écoute naturelle, permettant notamment la localisation d'une source dans tout l'espace entourant l'auditeur, en utilisant uniquement deux microphones. Les microphones sont placés dans les oreilles d'une personne ou d'un mannequin afin d'enregistrer la scène acoustique et les indices acoustiques de la localisation naturelle.

La prise de son directe utilisant la technologie binaurale présente cependant différents inconvénients. En effet, lorsque la prise de son est effectuée sur une tête naturelle, la personne portant les microphones doit rester immobile, contrôler sa respiration et éviter de déglutir afin de ne pas détériorer la qualité de l'enregistrement. L'utilisation d'une tête artificielle est difficilement envisageable lorsque l'on recherche une utilisation discrète et portative. Au moment de la restitution, l'incompatibilité des fonctions de transferts relatives à la tête de l'auditeur (« *Head Related Transfer Function* » en anglais ou HRTF) entre le dispositif de captation et l'auditeur final tend à fausser la localisation des sources. D'autre part, lorsque l'auditeur final bouge la tête, l'ensemble de la scène sonore se déplace.

Ainsi, bien que la prise de son binaurale soit capable d'encoder l'information spatiale des sources dans tout l'espace tridimensionnel, un tel encodage est spécifique de la morphologie de la personne ou du mannequin qui a servi à l'enregistrement. Aucune solution satisfaisante n'a été proposée à ce jour afin de remédier à ces limitations. Un inconvénient supplémentaire est que l'enregistrement binaural ne peut être écouté que sur un équipement spécifique dédié tel qu'un casque ou un système de haut-parleurs associés à un prétraitement.

Une troisième méthode consiste en une prise de son ambisonique par captation du champ acoustique. Une telle technologie fut introduite dans le document US 4,042,779 pour les harmoniques sphériques du premier ordre, et son extension aux ordres supérieurs HOA fut décrite par exemple dans le document J. Daniel, « Représentation de champs acoustiques, application à la transmission et à la reproduction de scènes sonores complexes dans un contexte multimédia », Université Paris 6, Paris, 2001. Ces documents permettent une acquisition plus ou moins précise de la scène sonore en fonction de l'ordre des harmoniques sphériques utilisées.

Cependant, une telle technologie présente l'inconvénient d'utiliser un grand nombre de capteurs, qui est fonction de l'ordre désiré. L'utilisation de la technologie ambisonique à l'ordre 1 a été largement exploitée en raison du faible nombre de capteurs requis (quatre microphones, voir US 4,042,779) pour sa mise en oeuvre. Des signaux issus des quatre microphones sont dérivés par matriçage (encodage), les quatre signaux définissant le format B de la technologie ambisonique. Les signaux dérivés par matriçage correspondent aux signaux qui auraient été enregistrés par un microphone omnidirectionnel et trois microphones à gradient de vitesse orientés selon les axes x, y et z. Les quatre signaux dérivés sont enregistrés et peuvent ensuite être restitués à un auditeur en utilisant un système de haut-parleurs distribués de façon arbitraire grâce à une matrice de décodage. Les haut-parleurs ainsi choisis peuvent également être obtenus sous la forme de sources virtuelles pour une restitution binaurale utilisant les fonctions de transfert HRTF relatives à la position de chaque source.

Ainsi, la prise de son ambisonique est aussi capable d'encoder l'information spatiale des sources dans tout l'espace 3D mais elle présente l'inconvénient de nécessiter un nombre important de capteurs, à savoir au minimum 4, et potentiellement un nombre encore plus important lorsqu'une précision spatiale satisfaisante est recherchée.

Il peut également être envisagé des post-traitements associés à la prise de son spatialisé, afin de remédier aux inconvénients détaillés ci-dessus.

En particulier, de tels traitements sont appliqués afin d'améliorer l'extraction de l'information spatiale. Jusqu'à présent, des post-traitements ont été appliqués à des signaux de type ambisonique, car ces derniers donnent accès à une représentation physique des ondes acoustiques.

Le document de V. Pulkki, « Directional audio coding in spatial sound reproduction and stereo upmixing », in Proc. of the AES 28th Int. Conf, Pitea, Sweden, 2006, propose une méthode pour extraire des signaux du format B les informations de localisation des sources. L'objectif d'une telle méthode est l'obtention d'une représentation plus compacte de la scène sonore tridimensionnelle (compression de l'information), dans laquelle les quatre signaux issus du format B sont ramenés à un unique signal monophonique accompagné d'un signal comportant des informations de localisation des sources sonores.

Un perfectionnement de cette méthode a été proposé dans le document de N. Barrett et S. Berge, « A new method for B-format to binaural transcoding », in 40th AES International conférence. Tokyo, Japan, 2010, p. 8-10. Ce perfectionnement prévoit d'utiliser les informations de localisation pour spatialiser les sources sonores virtuelles en vue d'une restitution sur haut-parleurs ou transcodage binaural. Les sources sonores virtuelles sont ainsi re-spatialisées a posteriori conformément à leur position identifiée, dans le format de spatialisation associé au dispositif de restitution.

Toutefois, que ce soit la méthode précédente ou sa version perfectionnée, la position des sources est déterminée avec une ambiguïté (typiquement une ambiguïté angulaire de $\pm \pi/2$ sur l'angle d'azimut dans le document de V. Pulkki), qui n'est pas résolue. La position de la source sonore n'est alors pas connue avec certitude.

La présente invention vient améliorer la situation.

Un premier aspect de l'invention concerne un procédé de traitement de données pour la détermination d'au moins une coordonnée spatiale d'une source sonore émettant un signal sonore, dans un espace tridimensionnel, selon la revendication 1.

Ainsi, la présente invention prévoit, à partir d'un nombre réduit de capteurs (au moins deux) de lever une incertitude sur une expression d'une coordonnée spatiale d'une source sonore, et ce, par la détermination d'une information supplémentaire qui exploite les caractéristiques des signaux reçus respectivement sur les capteurs. Par exemple, l'incertitude peut être due à une fonction cosinus inverse comme c'est le cas dans le document de V. Pulkki.

La présente invention permet ainsi d'améliorer la précision lors de la localisation de la source (détermination d'une coordonnée spatiale de la source). De plus, la présente invention est adaptable à toute unité microphonique comprenant les premier et deuxième capteurs. Ainsi, comme détaillé dans ce qui suit, les premier et deuxième capteurs peuvent être des microphones cardioïdes, des microphones bidirectionnels, ou être intégrés dans un microphone ambisonique d'ordre 1 ou d'ordre supérieur à 1 plus généralement.

Selon un mode de réalisation, l'espace étant orienté selon trois axes x, y et z, les premier et deuxième capteurs sont des microphones cardioïdes, le premier microphone cardioïde étant situé à une première position de l'espace et orienté selon l'axe x dans un sens croissant et le deuxième microphone cardioïde étant situé à une deuxième position de l'espace et orienté selon l'axe x dans un sens décroissant, le procédé peut comprendre initialement :

- modifier la première ou la deuxième position en vue d'introduire un décalage selon l'axe y entre le premier microphone cardioïde et le deuxième microphone cardioïde.

Les premier et deuxième signaux correspondent aux signaux sonores captés respectivement par les premier et deuxième microphones cardioïdes et l'information supplémentaire est le signe d'une différence entre des phases respectives des premiers et seconds signaux.

En décalant les microphones cardioïdes selon un axe perpendiculaire à l'axe d'orientation des microphones cardioïdes, l'invention permet l'introduction d'un retard entre les signaux captés par ces microphones, retard qui constitue une information supplémentaire à partir de laquelle il est possible de déterminer avec certitude la première coordonnée spatiale.

Des première et deuxième coordonnées spatiales de la source sonore peuvent être respectivement les coordonnées sphériques d'azimut $\theta$ et d'élévation $\phi$. Comme détaillé dans ce qui suit, les coordonnées spatiales peuvent être exprimées dans le domaine temporel ou dans le domaine fréquentiel. En complément, un troisième signal $s_{card3}$ capté par un troisième microphone cardioïde orienté selon l'axe z dans un sens croissant peut être obtenu. Le premier signal capté par le premier microphone cardioïde étant noté $s_{card1}$ et le second signal capté par le second microphone cardioïde étant noté $s_{card2}$, les expressions des coordonnées sphériques d'azimut $\theta$ et d'élévation $\phi$ peuvent être données par :

$$s_0(t) = s_{card1}(t, \theta, \phi) + s_{card2}(t, \theta, \phi)$$

$$\phi = \sin^{-1}[2\frac{s_{card3}(t, \theta, \phi)}{s_0(t, \theta, \phi)} - 1]$$

$$\theta = \cos^{-1}[\frac{s_{card1}^2(t, \theta, \phi) - s_{card2}^2(t, \theta, \phi)}{s_0(t)^2 \cdot \cos\phi}]$$

Le signe de la coordonnée sphérique d'azimut $\theta$ est donné par la différence de phases entre les premier et deuxième signaux.

L'expression de la coordonnée sphérique d'azimut $\theta$ présente une ambiguïté résultant de la fonction cosinus inverse. Cette ambiguïté est levée par exemple en exploitant la différence de phases entre les premier et deuxième signaux qui donne le signe de la coordonnée sphérique d'azimut $\theta$. Toutefois, l'invention n'est aucunement restreinte à la prise en compte de la différence de phase entre les premier et deuxième signaux : elle s'applique à toute information supplémentaire permettant d'identifier le demi-espace dans lequel est située la source sonore, ce qui permet de lever l'ambiguïté précitée.

Ainsi, la présente invention permet de déterminer complètement la direction de la source sonore (connaissance des coordonnées sphériques d'azimut $\theta$ et d'élévation $\phi$) à partir de seulement trois capteurs, à savoir les trois microphones cardioïdes, tout en levant l'incertitude sur la coordonnée sphérique d'azimut $\theta$. A noter qu'aucune restriction n'est attachée aux coordonnées considérées : la présente invention est applicable en coordonnées cylindriques ou cartésiennes.

En variante, des première et deuxième coordonnées spatiales de la source sonore peuvent être respectivement les coordonnées sphériques d'azimut $\theta$ et d'élévation $\phi$, le premier signal capté par le premier microphone cardioïde étant noté $s_{card1}$ et le second signal capté par le second microphone cardioïde étant noté $s_{card2}$, l'expression de la coordonnée sphérique d'azimut $\theta$ est donnée par :

$$s_0(t) = s_{card1}(t, \theta, \phi) + s_{card2}(t, \theta, \phi)$$

$$\theta = \cos^{-1}[\frac{s_{card1}^2(t, \theta, \phi) - s_{card2}^2(t, \theta, \phi)}{s_0(t)^2 \cdot \cos\phi}]$$

La coordonnée sphérique d'élévation $\phi$ peut être fixée arbitrairement et le signe de la coordonnée sphérique d'azimut $\theta$ peut être donné par la différence de phases entre les premier et deuxième signaux.

Cette variante permet de diminuer le nombre de capteurs à uniquement deux microphones cardioïdes, au détriment de la précision liée à la coordonnée sphérique d'élévation $\phi$, tout en levant l'incertitude sur la coordonnée sphérique d'azimut $\theta$.

Selon un mode de réalisation de l'invention, l'espace étant orienté selon trois axes x, y et z, des première et deuxième coordonnées spatiales de la source sonore peuvent être les coordonnées sphériques d'azimut $\theta$ et d'élévation $\phi$, les premier et deuxième capteurs peuvent être des capteurs bidirectionnels, le premier capteur étant orienté selon l'axe x et captant le signal noté $s_{bi1}$ et le deuxième capteur étant orienté selon l'axe y et captant le signal noté $s_{bi2}$.

Un troisième capteur cardioïde peut être dirigé selon l'axe z croissant et être apte à capter un signal noté $s_{card3}$. Les premiers et second signaux peuvent être notés respectivement $s_{cardvirt1}$ et $s_{cardvirt2}$ et être obtenus par:

$$s_{cardvirt1}(t, \theta, \phi) = \frac{s_0(t)}{2}(1 + \frac{s_{bi2}(t, \theta, \phi)}{s_0(t)}) \; ;$$

$$s_{cardvirt2}(t, \theta, \phi) = \frac{s_0(t)}{2}(1 - \frac{s_{bi2}(t, \theta, \phi)}{s_0(t)}) \; ;$$

avec

$$s_0(t) = \frac{s_{bi1}^2(t,\theta,\phi) + s_{bi2}^2(t,\theta,\phi) + 4s_{card3}^2(t,\theta,\phi)}{4s_{card3}^2(t,\theta,\phi)} \cdot$$

Les expressions des coordonnées sphériques d'azimut $\theta$ et d'élévation $\phi$ peuvent être données par:

$$\phi = \sin^{-1}[2\frac{s_{card3}(t,\theta,\phi)}{s_0(t,\theta,\phi)} - 1]$$

$$\theta = \cos^{-1}[\frac{s_{cardvirt1}^2(t,\theta,\phi) - s_{cardvirt2}^2(t,\theta,\phi)}{s_0(t)^2 \cdot \cos\phi}]$$

L'information supplémentaire pour lever l'ambiguïté peut être déterminée à partir d'une direction d'un vecteur d'intensité acoustique du signal sonore, la direction étant calculée à partir des signaux $s_{bi1}$ et $s_{bi2}$.

Ainsi, la présente invention est applicable lorsque le signal sonore est initialement capté par des microphones bidirectionnels. En effet, en obtenant les premier et deuxième signaux, des microphones cardioïdes virtuels sont synthétisés, ce qui permet de revenir à des expressions semblables au premier mode de réalisation pour les coordonnées sphériques d'azimut et d'élévation. En revanche, dans le cas de microphones bidirectionnels, il n'est pas possible d'introduire un retard, et l'invention prévoit alors la prise en compte d'une direction d'un vecteur d'intensité acoustique du signal sonore, la direction étant calculée à partir des signaux captés par ces microphones, afin de lever l'incertitude sur la détermination de la coordonnée sphérique d'azimut. A nouveau, trois capteurs seulement permettent une détermination complète de la direction de la source sonore.

En variante, l'espace étant orienté selon trois axes x, y et z, les première et deuxième coordonnées spatiales peuvent être les coordonnées sphériques d'azimut $\theta$ et d'élévation $\phi$, les premier et deuxième capteurs peuvent être des capteurs bidirectionnels, le premier capteur étant orienté selon l'axe x et captant le signal noté $s_{bi1}$ et le deuxième capteur étant orienté selon l'axe y et captant le signal noté $s_{bi2}$, les premiers et second signaux peuvent être notés respectivement $s_{cardvirt1}$ et $s_{cardvirt2}$ et peuvent être obtenus de la manière suivante :

$$s_{cardvirt1}(t,\theta,\phi) = \frac{s_0(t)}{2}(1 + \frac{s_{bi2}(t,\theta,\phi)}{s_0(t)}) \ ;$$

$$s_{cardvirt2}(t,\theta,\phi) = \frac{s_0(t)}{2}(1 - \frac{s_{bi2}(t,\theta,\phi)}{s_0(t)}) \ ;$$

avec

$$s_0(t) = \sqrt{s_{bi1}^2(t,\theta,\phi) + s_{bi2}^2(t,\theta,\phi)} \ .$$

L'expression de la coordonnée sphérique d'azimut $\theta$ peut être donnée par:

$$\theta = \cos^{-1}[\frac{s_{cardvirt1}^2(t,\theta,\phi) - s_{cardvirt2}^2(t,\theta,\phi)}{s_0(t)^2 \cdot \cos\phi}]$$

La coordonnée sphérique d'élévation $\phi$ est fixée arbitrairement et l'information supplémentaire peut être déterminée à partir d'une direction d'un vecteur d'intensité acoustique du signal sonore, la direction étant calculée à partir des signaux $s_{bi1}$ et $s_{bi2}$.

Ainsi, il est possible de diminuer le nombre de capteurs à deux microphones bidirectionnels tout en levant l'incertitude sur la coordonnée sphérique d'azimut $\theta$, au détriment de la précision quant à la détermination de la coordonnée sphérique d'élévation $\phi$.

En complément, l'information supplémentaire peut être une deuxième expression de la coordonnée sphérique d'azimut $\theta$ :

$$\theta(\omega) = \tan^{-1}(\frac{I_y(\omega)}{I_x(\omega)})$$

$\omega$ étant une pulsation du signal sonore émis par la source,

$I_y(\omega)$ étant la composante selon la coordonnée y du vecteur d'intensité acoustique du signal sonore, donnée par :

$$I_y(\omega) = \frac{1}{2\rho c}\mathrm{Re}[S_0^*(\omega)S_{bi2}(\omega)] \ ;$$

$I_x(\omega)$ étant la composante selon la coordonnée x du vecteur d'intensité acoustique du signal sonore, donnée par :

$$I_x(\omega) = \frac{1}{2\rho c}\mathrm{Re}[S_0^*(\omega)S_{bi1}(\omega)] \ ;$$

$S_0(\omega)$, $S_{bi1}(\omega)$ et $S_{bi2}(\omega)$ désignant les transformées de Fourier des signaux $S_0(t)$, $S_{bi1}(t)$ et $S_{bi2}(t)$ respectivement.

Ainsi, en obtenant une expression supplémentaire sur la coordonnée sphérique d'azimut $\theta$, il est possible de lever l'incertitude liée à la première expression comprenant la fonction cosinus inverse. En effet, bien que la fonction tangente inverse présente également une incertitude, la fonction tangente inverse et la fonction cosinus inverse permettent d'obtenir deux estimations de la coordonnée sphérique d'azimut $\theta$ qui sont complémentaires. Par exemple, comme détaillé ultérieurement, l'utilisation d'un tableau permet de différencier quatre cas de figures, selon les intervalles dans lesquels se situent les deux estimations de la coordonnée sphérique d'azimut $\theta$. Une valeur désambiguïsée de la coordonnée sphérique d'azimut $\theta$ peut être déterminée. En complément, il est possible de prendre en compte des facteurs liés à la scène sonore à étudier (nombre de sources, niveau de bruit, complexité) afin de choisir l'une ou l'autre des expressions désambiguïsées de la coordonnée sphérique d'azimut $\theta$.

Selon un mode de réalisation, des première et deuxième coordonnées spatiales de la source sonore peuvent être des coordonnées sphériques d'azimut $\theta$ et d'élévation $\phi$, les premier et deuxièmes capteurs peuvent faire partie d'un microphone ambisonique d'ordre 1 ou d'ordre supérieur à 1 plus généralement, les signaux issus du microphone ambisonique peuvent être un signal de pression $b_{00}^1(t)$ et trois signaux de gradient de pression $b_{11}^1(t)$, $b_{11}^{-1}(t)$ et $b_{10}^1(t)$. Le premier signal, noté $s_{cardvirt1}$, et le second signal, noté $s_{cardvirt2}$, et un troisième signal $s_{cardvirt3}$ peuvent être obtenus à partir des signaux $b_{00}^1(t)$, $b_{11}^1(t)$, $b_{11}^{-1}(t)$ et $b_{10}^1(t)$ par:

$$s_{cardvirt1}(t,\theta,\phi) = \frac{b_{00}^1(t)}{2}(1 + \frac{b_{11}^{-1}(t)}{b_{00}^1(t)}) \ ;$$

$$s_{cardvirt2}(t,\theta,\phi) = \frac{b_{00}^1(t)}{2}(1 - \frac{b_{11}^{-1}(t)}{b_{00}^1(t)}) \ ;$$

$$s_{cardvirt3}(t,\theta,\phi) = \frac{b_{00}^1(t)}{2}(1 + \frac{b_{10}^1(t)}{b_{00}^1(t)}) \ .$$

Les expressions des coordonnées sphériques d'azimut $\theta$ et d'élévation $\phi$ peuvent alors être données par:

$$\phi = \sin^{-1}[2\frac{s_{cardvirt3}(t,\theta,\phi)}{s_0(t,\theta,\phi)} - 1]$$

$$\theta = \cos^{-1}\left[\frac{s^2_{cardvirt1}(t,\theta,\phi) - s^2_{cardvirt2}(t,\theta,\phi)}{s_0(t)^2 \cdot \cos\phi}\right]$$

avec $s_0 = b^1_{00}(t)$. L'information supplémentaire peut être déterminée à partir d'une direction d'un vecteur d'intensité acoustique du signal sonore, la direction étant calculée à partir des signaux $b^1_{00}(t)$, $b^1_{11}(t)$ et $b^{-1}_{11}(t)$.

Ainsi, la présente invention est applicable lorsque les signaux sonores sont initialement captés par un microphone ambisonique à l'ordre 1, tel que le microphone décrit dans le brevet US 4,042,779. En effet, en obtenant les premier et deuxième signaux, des microphones cardioïdes virtuels sont synthétisés, ce qui permet de revenir à des expressions semblables au premier mode de réalisation pour les coordonnées sphériques d'azimut et d'élévation. En revanche, dans le cas d'un microphone ambisonique à l'ordre 1, il n'est pas possible d'introduire un retard, et l'invention prévoit alors la prise en compte d'une direction d'un vecteur d'intensité acoustique du signal sonore, la direction étant calculée à partir des signaux captés par ces microphones, afin de lever l'incertitude sur la détermination de la coordonnée sphérique d'azimut. Ainsi, la direction de la source sonore peut être déterminée sans incertitude, sans toutefois nécessiter l'introduction de microphones supplémentaires.

En complément, l'information supplémentaire peut être une deuxième expression de la coordonnée sphérique d'azimut $\theta$ :

$$\theta(\omega) = \tan^{-1}\left(\frac{I_y(\omega)}{I_x(\omega)}\right)$$

$\omega$ étant une pulsation du signal sonore émis par la source, $I_y(\omega)$ étant donné par :

$$I_y(\omega) = \frac{1}{2\rho c}\mathrm{Re}\left[B^1_{00}{}^*(\omega)B^{-1}_{11}(\omega)\right] ;$$

$I_x(\omega)$ étant donné par :

$$I_x(\omega) = \frac{1}{2\rho c}\mathrm{Re}\left[B^1_{00}{}^*(\omega)B^1_{11}(\omega)\right] ;$$

$B^1_{00}(\omega)$, $B^1_{11}(\omega)$ et $B^{-1}_{11}(\omega)$ désignant les transformées de Fourier des signaux $b^1_{00}(t)$, $b^1_{11}(t)$ et $b^{-1}_{11}(t)$ respectivement.

Ainsi, en obtenant une expression supplémentaire sur la coordonnée sphérique d'azimut $\theta$, il est possible de lever l'incertitude liée à la première expression comprenant la fonction cosinus inverse. En effet, bien que la fonction tangente inverse présente également une incertitude, la fonction tangente inverse et la fonction cosinus inverse permettent d'obtenir deux estimations de la coordonnée sphérique d'azimut $\theta$ qui sont complémentaires. Par exemple, comme détaillé ultérieurement, l'utilisation d'un tableau permet de différencier quatre cas de figures, selon les intervalles dans lesquels se situent les deux estimations de la coordonnée sphérique d'azimut $\theta$. Une valeur désambiguïsée de la coordonnée sphérique d'azimut $\theta$ peut être déterminée. En complément, il est possible de prendre en compte des facteurs liés à la scène sonore à étudier (nombre de sources, niveau de bruit, complexité) afin de choisir l'une ou l'autre des expressions désambiguïsées de la coordonnée sphérique d'azimut $\theta$.

En complément ou en variante, une expression supplémentaire peut être déterminée pour la coordonnée sphérique d'élévation :

$$\phi(\omega) = \tan^{-1}\left(\frac{I_z(\omega)}{\sqrt{I_x^2(\omega) + I_y^2(\omega)}}\right)$$

$\omega$ étant une pulsation du signal sonore émis par la source,
$I_y(\omega)$ étant la composante selon la coordonnée y du vecteur d'intensité acoustique du signal sonore et étant donnée par :

$$I_y(\omega) = \frac{1}{2\rho c} \text{Re}\left[B_{00}^1{}^*(\omega)B_{11}^{-1}(\omega)\right] ;$$

$I_x(\omega)$ étant la composante selon la coordonnée x du vecteur d'intensité acoustique du signal sonore et étant donnée par :

$$I_x(\omega) = \frac{1}{2\rho c} \text{Re}\left[B_{00}^1{}^*(\omega)B_{11}^1(\omega)\right] ;$$

$I_z(\omega)$ étant donné par :

$$I_z(\omega) = \frac{1}{2\rho c} \text{Re}\left[B_{00}^1{}^*(\omega)B_{01}^1(\omega)\right] ;$$

$B_{00}^1(\omega)$, $B_{11}^1(\omega)$, $B_{01}^1(\omega)$ et $B_{11}^{-1}(\omega)$ désignant les transformées de Fourier des signaux $b_{00}^1(t)$, $b_{11}^1(t)$, $b_{01}^1(t)$ et $b_{11}^{-1}(t)$ respectivement.

La coordonnée sphérique d'élévation peut être déterminée à partir de l'expression ou de l'expression supplémentaire.

Ainsi, comme pour la détermination de la coordonnée sphérique d'azimut, il est possible de privilégier l'une ou l'autre des expressions déterminées pour la coordonnée sphérique d'élévation. A nouveau, ce choix peut être fait en fonction de facteurs liés à la scène sonore à étudier, tels que le nombre de sources, le niveau de bruit, la complexité, etc.

Un deuxième aspect de l'invention concerne un programme d'ordinateur comprenant des instructions de code de programme enregistrées sur un support lisible par un ordinateur, pour l'exécution des étapes du procédé selon le premier aspect de l'invention.

Un troisième aspect de l'invention concerne un dispositif de traitement de données pour la détermination d'au moins une coordonnée spatiale d'une source sonore émettant un signal sonore, dans un espace tridimensionnel, selon la revendication 12.

Un quatrième aspect de l'invention concerne un système d'acquisition de données sonores, comprenant une unité microphonique, selon la revendication 13.

Selon un mode de réalisation, les premier et deuxième capteurs peuvent être des microphones cardioïdes. En variante, les premier et deuxième capteurs peuvent être des microphones bidirectionnels.

Un cinquième aspect de l'invention concerne un terminal de télécommunication comprenant un système d'acquisition de données sonores selon le quatrième mode de réalisation.

D'autres caractéristiques et avantages de l'invention apparaîtront à l'examen de la description détaillée ci-après, et des dessins annexés sur lesquels:

- la figure 1 est un diagramme représentant les étapes générales d'un procédé de traitement de données selon un mode de réalisation;
- la figure 2 représente une structure générale d'un dispositif de traitement de données selon un mode de réalisation;
- la figure 3 illustre un système d'acquisition et de traitement de données sonores selon un mode de réalisation de l'invention ;
- la figure 4 illustre un terminal de télécommunication selon un mode de réalisation de l'invention ;
- la figure 5 illustre une unité microphonique selon un mode de réalisation de l'invention ;
- la figure 6 illustre les étapes du procédé selon un mode de réalisation de l'invention pour des signaux captés par l'unité microphonique de la figure 4 ;
- les figures 7a et 7b illustrent une unité microphonique selon un autre mode de réalisation de l'invention ;
- la figure 8 illustre les étapes du procédé selon un mode de réalisation de l'invention pour des signaux captés par l'unité microphonique des figures 6a et 6b.

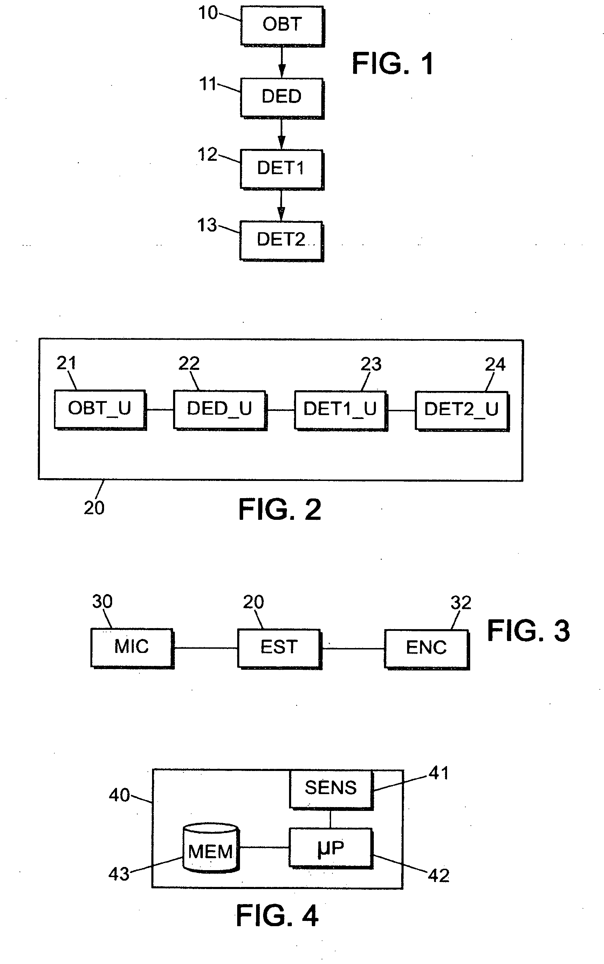

La figure 1 est un diagramme illustrant les étapes générales d'un procédé de traitement de données selon un mode de réalisation de l'invention.

Le procédé permet la détermination d'au moins une coordonnée spatiale d'une source sonore émettant un signal sonore, dans un espace tridimensionnel. On entend par coordonnée spatiale toute coordonnée parmi un système de trois coordonnées permettant de repérer la source sonore dans l'espace tridimensionnel. Aucune restriction n'est attachée au système de coordonnées considérées. Par exemple, il peut s'agir des coordonnées sphériques, cartésiennes ou cylindriques.

A une étape 10, au moins un premier signal et un deuxième signal sont obtenus à partir du signal sonore capté selon des directivités différentes par un premier capteur et un deuxième capteur. On entend par capteur tout système microphonique d'acquisition de données sonores. Les capteurs considérés dépendent du système microphonique en question. De nombreux exemples de systèmes microphoniques sont présentés dans ce qui suit et l'invention s'applique ainsi à tout système microphonique. Les capteurs ayant des directivités différentes, ils captent deux signaux distincts, bien que ces signaux proviennent du même signal sonore émis par la source sonore.

A une étape 11, une expression d'au moins une première coordonnée spatiale de la source sonore est déterminée à partir des premier et deuxième signaux, une telle expression comportant une incertitude sur la coordonnée spatiale. Comme évoqué dans la partie introductive, l'incertitude peut être une ambiguïté angulaire de $\pm\pi/2$ sur l'angle d'azimut. C'est par exemple le cas lorsque la première coordonnée spatiale est exprimée sous la forme d'une fonction cosinus inverse. La présente invention permet de lever une telle incertitude.

A cet effet, à une étape 12, une information supplémentaire relative à la première coordonnée spatiale de la source sonore est déterminée à partir d'une comparaison entre des caractéristiques respectives des signaux captés par les premier et deuxième capteurs. Comme détaillé dans ce qui suit, la comparaison peut être une différence entre les phases des signaux captés par les premier et deuxième capteurs ou un d'une direction d'un vecteur d'intensité acoustique du signal sonore, la direction étant calculée à partir des signaux captés.

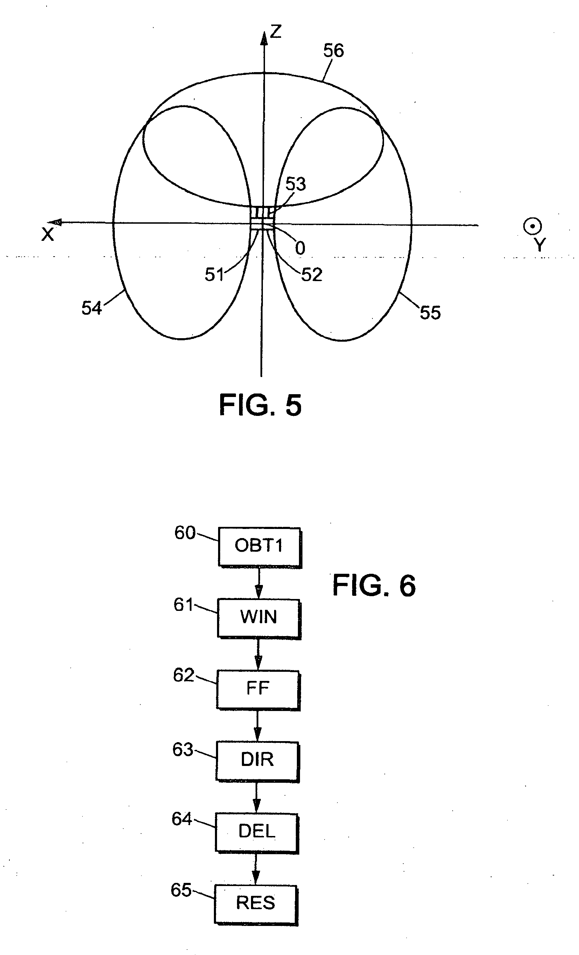

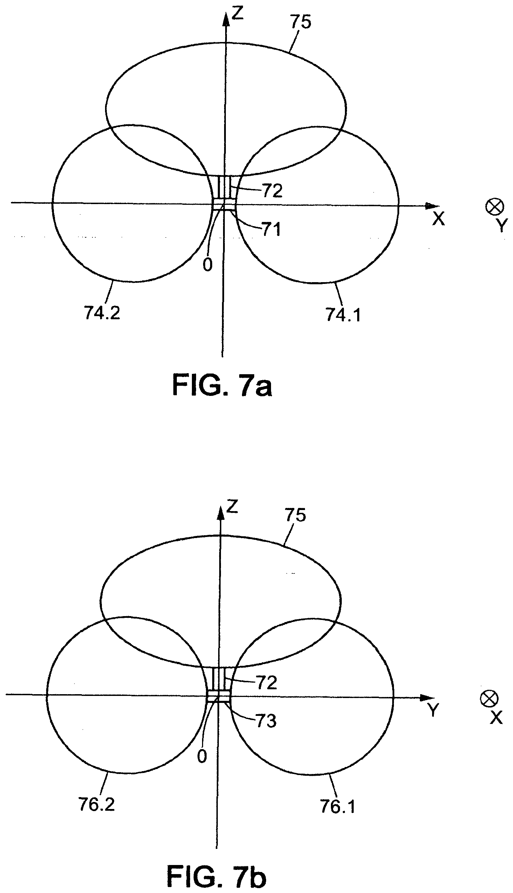

A une étape 13, la première coordonnée spatiale de la source sonore est déterminée, avec certitude, sur la base de l'expression et de l'information supplémentaire. Ainsi, le procédé selon l'invention permet de lever l'incertitude sur la première coordonnée spatiale par l'utilisation d'une information supplémentaire déterminée à partir d'une comparaison entre des caractéristiques respectives des signaux captés par les premier et deuxième capteurs. La précision de la localisation de la source sonore est ainsi améliorée. Des exemples de procédés selon l'invention seront détaillés dans ce qui suit, en référence aux figures 5 et 7.

La figure 2 présente une structure générale d'un dispositif de traitement de données 20 selon un mode de réalisation de l'invention.

Le dispositif 20 comprend une unité d'obtention 21 d'au moins un premier signal et un deuxième signal à partir de signaux sonores captés selon des directivités différentes par un premier capteur et un deuxième capteur, ainsi qu'une unité de déduction 22 pour déduire des premier et deuxième signaux une expression d'au moins une première coordonnée spatiale de la source sonore, l'expression comportant une incertitude sur la coordonnée spatiale.

Le dispositif 20 comprend en outre une première unité de détermination 23 d'une information supplémentaire relative à la première coordonnée spatiale de la source sonore, à partir d'une comparaison entre des caractéristiques respectives des signaux captés par les premier et deuxième capteurs ainsi qu'une seconde unité de détermination 24 de la première coordonnée spatiale de la source sonore sur la base de l'expression et de l'information supplémentaire.

La figure 3 illustre un système d'acquisition de signaux sonores selon un mode de réalisation de l'invention.

Le système comprend une unité microphonique 30 apte à capter des signaux sonores. Comme détaillé dans ce qui suit, l'unité microphonique 30 peut prendre diverses formes et comprendre plusieurs capteurs tels que des microphones cardioïdes et/ou bidirectionnels, ou qu'un microphone ambisonique. Aucune restriction n'est attachée à l'unité microphonique 30 considérée.

Le système d'acquisition comprend en outre le dispositif de traitement de données 20 décrit ci-avant. Dans ce qui suit, on fait l'hypothèse qu'il n'existe qu'une seule source sonore à chaque instant et par bande fréquentielle considérée. Ainsi, le traitement par le dispositif 20 s'effectue sur des fenêtres temporelles dont la taille est déterminée en fonction de l'écart des capteurs et en fonction d'un nombre d'échantillons fréquentiels souhaités. Selon l'invention, il est également possible d'ajouter des zéros (« *zeropadding* » en anglais) en fonction d'une discrétisation spectrale souhaitée.

Le système d'acquisition comprend en outre une unité d'encodage 32. A partir des directions des sources sonores déterminées grâce au dispositif de traitement de données 20, l'unité d'encodage 32 peut spatialiser des sources virtuelles selon le type d'encodage spatial d'une technologie de restitution considérée. Par exemple, dans le cas d'un rendu binaural sur casque ou sur haut-parleurs, les directions des sources déterminent les HRTF à utiliser pour spatialiser les sons, avec une possibilité de choix personnalisé des HRTF pour l'auditeur. Toujours dans le cas d'un rendu binaural sur casque ou sur haut-parleurs, la correction de la position relative à la tête est possible grâce à l'utilisation d'un système de suivi des mouvements de la tête (« *head tracking* » en anglais). Dans un autre mode de restitution, l'unité d'encodage 32 synthétise des signaux ambisoniques aux différents ordres pour une diffusion sur casque ou sur un ensemble de haut-parleurs ad doc dont les positions sont connues.

La figure 4 illustre un terminal de télécommunication 40 selon un mode de réalisation de l'invention. Le terminal de télécommunication 40 peut être un téléphone mobile (de type Smartphone par exemple), un PDA (pour *« Personal Digital Assistant »*) ou encore une tablette tactile par exemple. Le terminal de télécommunication peut intégrer le système décrit sur la figure 3, et comprend à cet effet un ensemble de capteurs 41, correspondant à l'unité microphonique 30, un microprocesseur 42 et une mémoire 43.

La mémoire est apte à stocker un programme d'ordinateur comprenant des instructions de code de programme permettant l'exécution par le microprocesseur 42 des étapes du procédé selon l'invention. Le microprocesseur peut ainsi réaliser les fonctionnalités du dispositif 20, et éventuellement de l'unité d'encodage 32.

La figure 5 illustre une unité microphonique 30 selon un premier mode de réalisation de l'invention. L'unité microphonique 30 comprend trois capteurs qui sont des microphones cardioïdes 51, 52 et 53.

Les trois microphones 51, 52 et 53 sont présentés dans un plan x,z comprenant l'origine O, de l'espace orienté par un repère orthonormé comprenant les trois axes x, y et z.

Le premier microphone cardioïde 51 est dirigé selon l'axe x vers des valeurs croissantes tandis que le deuxième microphone cardioïde 52 est dirigé vers des valeurs de x décroissantes. Le troisième microphone 53 est dirigé selon l'axe z vers des valeurs croissantes. Les directivités respectives des microphones 51, 52 et 53, en fonction des directions de pointage, sont illustrées par des cardioïdes 54, 55 et 56 vues dans le plan (x,z).

En effet, la fonction de directivité M d'un microphone cardioïde est exprimée par la relation :

$$M(\alpha) = \frac{1}{2}(1+\alpha) \tag{1}$$

$$\text{avec } \alpha = \vec{d}_s \cdot \vec{d}_p \tag{2}$$

où $\vec{d}_s$ est un vecteur définissant la direction de la source sonore et $\vec{d}_p$ le vecteur déterminant la direction de pointage du microphone.

Dans l'exemple de la figure 4, des directions de pointages $\vec{d}_{p1}$, $\vec{d}_{p2}$ et $\vec{d}_{p3}$ respectives des trois microphones 51, 52 et 53 peuvent être exprimées dans une base de coordonnées cartésiennes $B_C$ :

$$\vec{d}_{p1} = \begin{vmatrix} 1 \\ 0 \\ 0 \end{vmatrix}_{B_C}, \ \vec{d}_{p2} = \begin{vmatrix} -1 \\ 0 \\ 0 \end{vmatrix}_{B_C}, \ \vec{d}_{p3} = \begin{vmatrix} 0 \\ 0 \\ 1 \end{vmatrix}_{B_C} \tag{3}$$

Considérant que la direction de la source sonore est exprimée dans une base $B_S$ en coordonnées sphériques ou dans la base de coordonnées cartésiennes $B_C$ :

$$\vec{d}_s = \begin{vmatrix} \theta \\ \phi \\ r \end{vmatrix}_{B_S} \begin{matrix} = \\ B_C \end{matrix} \begin{vmatrix} r.\cos\phi\cos\theta \\ r.\cos\phi\sin\theta \\ r.\sin\phi \end{vmatrix} \tag{4}$$

où les coordonnées sphériques sont définies par le rayon r, l'angle d'azimut $\theta$ et l'angle d'élévation $\phi$.

Des fonctions de directivité pour les trois microphones 51, 52 et 53 peuvent alors s'exprimer de la manière suivante :

$$M_{card1}(\theta,\phi) = \frac{1}{2}(1+r.\cos\phi\cos\theta) \qquad A$$

$$M_{card2}(\theta,\phi) = \frac{1}{2}(1-r.\cos\phi\cos\theta) \qquad B \qquad (5)$$

$$M_{card3}(\theta,\phi) = \frac{1}{2}(1+r.\sin\phi) \qquad C$$

Par souci de simplification, il est considéré dans ce qui suit que r=1, ce qui ne modifie pas la direction de pointage.

La figure 6 illustre un premier mode de réalisation particulier d'un procédé selon l'invention, mis en oeuvre lorsque l'unité microphonique 30 est l'unité représentée sur la figure 5.

La source sonore dont la direction est pointée par le vecteur $\vec{d}_s$ induit un signal $s_0(t)$ à l'origine O du repère.

En considérant idéalement que les microphones 51, 52 et 53 sont placés à l'origine O, les signaux $s_{card1}(t)$, $s_{card2}(t)$ et $s_{card3}(t)$ captés respectivement par les microphones 51, 52 et 53 sont :

$$s_{card1}(t) = M_{card1}(\theta,\phi)s_0(t) \qquad A$$

$$s_{card2}(t) = M_{card2}(\theta,\phi)s_0(t) \qquad B \qquad (6)$$

$$s_{card3}(t) = M_{card3}(\theta,\phi)s_0(t) \qquad C$$

A une étape 60, des premier, deuxième et troisième signaux sont obtenus par l'unité d'obtention 21 à partir des signaux $s_{card1}(t)$, $s_{card2}(t)$ et $s_{card3}(t)$ captés respectivement par les microphones 51, 52 et 53. Dans cet exemple, les premier, deuxième et troisième signaux sont égaux aux signaux $s_{card1}(t)$, $s_{card2}(t)$ et $s_{card3}(t)$ respectivement.

A une étape 61, l'unité d'obtention peut appliquer un fenêtrage aux premier, deuxième et troisième signaux. De préférence, et afin de minimiser les oscillations dans le domaine fréquentiel, une trame temporelle est fenêtrée par une fenêtre à transition douce.

A une étape 62, l'unité d'obtention 21 applique une transformée de Fourier aux premier, deuxième et troisième signaux. Ainsi, les opérations décrites dans ce qui suit agissent dans le domaine fréquentiel, fréquence par fréquence.

Dans ce qui suit, certaines expressions sont encore données dans le domaine temporel : la transformée de Fourier étant linéaire, ces expressions seraient similaires dans le domaine fréquentiel (à une convention de notation près, et en remplaçant t par une pulsation).

Des relations de directivité 6A, 6B et 6C, l'unité de déduction 22 peut déduire à une étape 63 les expressions suivantes pour le signal acoustique $s_0(t)$ généré par la source sonore à l'origine O et pour les coordonnées spatiales $\theta$ et $\phi$ :

$$s_0(t) = s_{card1}(t,\theta,\phi) + s_{card2}(t,\theta,\phi) \qquad (7)$$

(en combinant 5A, 5B et 6)

$$\phi = \sin^{-1}[2\frac{s_{card3}(t,\theta,\phi)}{s_0(t,\theta,\phi)} - 1] \qquad (8)$$

(en combinant 5C et 6)

$$\theta = \cos^{-1}[\frac{s_{card1}^2(t,\theta,\phi) - s_{card2}^2(t,\theta,\phi)}{s_0(t)^2 \cdot \cos\phi}] \qquad (9)$$

(en combinant 5A et 5B)

Ainsi des expressions des coordonnées spatiales $\theta$ et $\phi$ sont obtenues uniquement à partir de la directivité des microphones 51, 52 et 53 (les signaux captés respectivement par ces microphones).

L'expression de la coordonnée d'azimut $\theta$ prend toutefois la forme d'un cosinus inverse, et la coordonnée d'azimut $\theta$ est ainsi déterminée avec une incertitude de $\pm\pi/2$.

La présente invention permet de lever une telle incertitude et utilisant une information supplémentaire telle que précédemment décrite. L'information supplémentaire est déterminée par la première unité de détermination 23 à une étape 64.

Dans l'exemple illustré aux figures 5 et 6, l'information supplémentaire est le signe d'une différence entre les phases respectives (ou retard) des premier et second signaux.

En effet, un décalage entre des positions respectives des microphones 51 et 52, perpendiculaire à la direction de pointage de ces microphones et dans le plan (x,y) (donc selon l'axe y) est introduit selon l'invention.

Le signal $s_{card1}$ capté par le premier microphone 51 décalé aux coordonnées cartésiennes $(x_1,y_1,z_1)$ est décrit par :

$$s_{card1}(t) = M_{card1}(\theta,\phi)s_0(t - \tau_1) \qquad (10)$$

où $\tau_1$ représente la différence de marche engendrée par la distance entre le microphone 51 et l'origine O, et qui peut s'exprimer par la relation :

$$\tau_1 = \frac{1}{c}\vec{d}_s.\vec{E}_1 \qquad (11)$$

où c est la célérité des ondes acoustiques et $\vec{E}_1$ est un vecteur déterminant l'emplacement du microphone 51 en coordonnées cartésiennes dans la base $B_C$ :

$$\vec{E}_1 = \begin{array}{c}\\ \\ B_C\end{array}\begin{vmatrix} x_1 \\ y_1 \\ z_1 \end{vmatrix} \qquad (12)$$

considérant que la direction $\vec{d}_s$ de la source sonore est exprimée dans la base sphérique $B_S$ ou dans la base cartésienne $B_C$ :

$$\vec{d}_s = \begin{array}{c}\\ \\ B_C\end{array}\begin{vmatrix} \theta \\ \phi \\ r \end{vmatrix}\begin{array}{c}\\ \\ B_S\end{array} = \begin{vmatrix} r.\cos\phi\cos\theta \\ r.\cos\phi\sin\theta \\ r.\sin\phi \end{vmatrix}$$

et qu'ainsi :

$$\tau_1 = \frac{1}{c}(x_1 r.\cos\phi\cos\theta + y_1 r.\cos\phi\sin\theta + z_1 r.\sin\phi) \qquad (13)$$

De même, on obtient pour le deuxième microphone 52 :

$$s_{card2}(t) = M_{card2}(\theta,\phi)s_0(t-\tau_2) \qquad (14)$$

avec

$$\tau_2 = \frac{1}{c}(x_2 r.\cos\phi\cos\theta + y_2 r.\cos\phi\sin\theta + z_2 r.\sin\phi) \qquad (15)$$

Dans le domaine fréquentiel, les signaux $s_{card1}(t)$ et $s_{card2}(t)$ deviennent $S_{card1}(\omega)$ et $S_{card2}(\omega)$, où $\omega=2\pi f$ désigne la pulsation, f étant la fréquence associée au signal sonore émis par la source sonore.
Dans ce qui suit, la transformée de Fourier est notée FT[].

$$FT[s_{card1}(t,\theta,\phi)] = S_{card1}(\omega,\theta,\phi) = M_{card1}(\theta,\phi)S_0(\omega)e^{-j\omega\tau_1} \quad (16)$$

$$FT[s_{card2}(t,\theta,\phi)] = S_{card2}(\omega,\theta,\phi) = M_{card2}(\theta,\phi)S_0(\omega)e^{-j\omega\tau_2} \quad (17)$$

où $S_0(\omega) = |S_0(\omega)|e^{j\angle S_0(\omega)}$, '$\angle$' désignant la phase du signal sonore à l'origine O.
Ainsi :

$$S_{card1}(\omega,\theta,\phi) = M_{card1}(\theta,\phi)|S_0(\omega)|e^{j(\angle S_0(\omega)-\omega\tau_1)} \quad (18)$$

$$S_{card2}(\omega,\theta,\phi) = M_{card2}(\theta,\phi)|S_0(\omega)|e^{j(\angle S_0(\omega)-\omega\tau_2)} \quad (19)$$

En notant

$$\angle S_1(\omega) = \angle S_0(\omega) - \omega\tau_1 \quad (20)$$

et

$$\angle S_2(\omega) = \angle S_0(\omega) - \omega\tau_2 \quad (21)$$

On obtient :

$$\angle S_1 - \angle S_2 = -\omega(\tau_1 - \tau_2) \quad (22)$$

En notant $\tau_{12} = \tau_1 - \tau_2$ le retard temporel entre les signaux captés par les microphones 51 et 52, on obtient :

$$\tau_{12}(\omega) = -\frac{1}{\omega}(\angle S_1 - \angle S_2) \quad (23)$$

A une étape 65, la seconde unité de détermination 24 détermine la coordonnée spatiale $\theta$ sur la base de l'information supplémentaire (signe du retard ou différence de phase entre les signaux captés respectivement par les microphones 51 et 52) et de l'expression de $\theta$ comportant une incertitude (expression (9)).

Le retard temporel $\tau_{12}$ étant uniquement utilisé pour lever l'incertitude introduite par l'expression de la coordonnée d'azimut $\theta$ (expression (9)), seul le signe du retard temporel $\tau_{12}$ est utilisé en l'introduisant directement dans l'expression (9) :

$$\theta = \frac{\tau_{12}(\omega)}{|\tau_{12}(\omega)|}\cos^{-1}\left[\frac{S_{card1}^2(\omega,\theta,\phi) - S_{card2}^2(\omega,\theta,\phi)}{S_0(\omega)^2 \cdot \cos\phi}\right] \quad (24)$$

Les figures 7a et 7b illustrent une unité microphonique 30 selon un deuxième mode de réalisation de l'invention. L'unité microphonique 30 comprend trois capteurs, à savoir un premier microphone bidirectionnel 71, un second microphone bidirectionnel 73 et un microphone cardioïde 72. On entend par microphone bidirectionnel un microphone à gradient de pression.

Le premier microphone bidirectionnel 71 est placé sur l'axe x (voir figure 7a), le second microphone bidirectionnel 73 est placé sur l'axe y (voir figure 7b) et le microphone cardioïde 72 est orienté sur l'axe z vers les valeurs croissantes (voir figures 7a et 7b).

La directivité, en fonction des directions de pointage, du premier microphone bidirectionnel 71 est représentée sous forme de deux sphères orientées vers les x positifs et x négatifs et présentées dans le plan (x,z) sous les références 74.1 et 74.2 de la figure 7a, respectivement.

La directivité, en fonction des directions de pointage, du second microphone bidirectionnel 73 est représentée sous forme de deux sphères orientées vers les y positifs et y négatifs et présentées dans le plan (y,z) sous les références 76.1 et 76.2 de la figure 7b, respectivement.

La directivité du microphone cardioïde 72, en fonction des directions de pointage, est illustrée par une cardioïde 75 vue dans le plan (x,z) sur la figure 7a et dans le plan (y,z) sur la figure 7b.

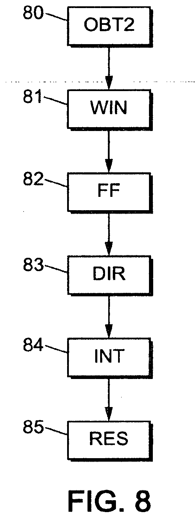

La figure 8 illustre un deuxième mode de réalisation particulier d'un procédé selon l'invention, mis en oeuvre lorsque l'unité microphonique 30 est l'unité représentée sur les figures 7a et 7b.

L'unité microphonique 30 permet ainsi l'obtention de signaux issus d'une paire de microphones bidirectionnels 71 et 73 placés perpendiculairement dans le plan horizontal (x,y). L'invention propose alors de reconstruire de façon virtuelle les signaux captés par les microphones cardioïdes 51 et 52 de la figure 5 afin d'obtenir des premier et seconds signaux comparables à ceux obtenus à l'étape 50 de la figure 5.

A cet effet, à une étape 80, l'unité d'obtention 21 détermine des premier et seconds signaux à partir du signal sonore $s_{bi1}$ capté par le premier microphone bidirectionnel 71 et du signal sonore $s_{bi2}$ capté par le second microphone bidirectionnel 73.

Les expressions des signaux $s_{bi1}$ et $s_{bi2}$, et du signal $s_{card3}$ capté par le microphone cardioïde 72, sont données par les formules suivantes :

$$s_{bi1}(t,\theta,\phi) = s_0(t)\cos\theta\cos\phi \qquad\qquad A$$

$$s_{bi2}(t,\theta,\phi) = s_0(t)\sin\theta\cos\phi \qquad\qquad B \qquad\qquad (25)$$

$$s_{card3}(t,\theta,\phi) = \frac{s_0(t)}{2}(1+\sin\phi) \qquad\qquad C$$

Le premier signal $s_{cardvirt1}$ et le second signal $s_{cardvirt2}$ qui auraient été captés par deux microphones cardioïdes sont reconstruits de la manière suivante :

$$s_{cardvirt1}(t,\theta,\phi) = \frac{s_0(t)}{2}\left(1+\frac{s_{bi2}(t,\theta,\phi)}{s_0(t)}\right) \qquad\qquad (26)$$

$$s_{cardvirt2}(t,\theta,\phi) = \frac{s_0(t)}{2}\left(1-\frac{s_{bi2}(t,\theta,\phi)}{s_0(t)}\right) \qquad\qquad (27)$$

$$\text{avec } s_0(t) = \frac{s_{bi1}^2(t,\theta,\phi)+s_{bi2}^2(t,\theta,\phi)+4s_{card3}^2(t,\theta,\phi)}{4s_{card3}(t,\theta,\phi)} \qquad (28)$$

L'unité d'obtention 21 obtient ainsi des premier, deuxième et troisième signaux $s_{cardvirt1}$, $s_{cardvirt2}$ et $s_{card3}$.

A une étape 81, l'unité d'obtention 21 peut appliquer un fenêtrage aux premier, deuxième et troisième signaux. Comme précédemment expliqué, afin de minimiser les oscillations dans le domaine fréquentiel, une trame temporelle est fenêtrée par une fenêtre à transition douce.

A une étape 82, l'unité d'obtention 21 applique une transformée de Fourier aux premier, deuxième et troisième signaux. Ainsi, les opérations décrites dans ce qui suit agissent dans le domaine fréquentiel, fréquence par fréquence. A nouveau, certaines expressions sont encore données dans le domaine temporel : la transformée de Fourier étant linéaires, elles seraient similaires dans le domaine fréquentiel.

A une étape 83, l'unité de déduction 22 peut déduire des premier, deuxième et troisième signaux les expressions suivantes pour les coordonnées spatiales $\theta$ et $\phi$ :

$$\phi = \sin^{-1}\left[2\frac{s_{card3}(t,\theta,\phi)}{s_O(t,\theta,\phi)}-1\right] \qquad\qquad (29)$$

$$\theta = \cos^{-1}\left[\frac{s_{cardvirt1}^2(t,\theta,\phi)-s_{cardvirt2}^2(t,\theta,\phi)}{s_0(t)^2\cdot\cos\phi}\right] \qquad\qquad (30)$$

A nouveau, l'expression de la coordonnée spatiale $\theta$ présente une incertitude due à la fonction cosinus inverse. Dans une telle configuration virtuelle, l'incertitude précitée ne peut être levée en introduisant un retard entre les microphones bidirectionnels 71 et 73.

Toutefois, une information supplémentaire relative à d'une direction d'un vecteur d'intensité acoustique du signal sonore, la direction étant calculée à partir des signaux captés par les premier et second microphones bidirectionnels 71 et 73, peut être déterminée par la première unité de détermination 23, afin de lever l'incertitude sur l'expression (30).

L'intensité acoustique active est un vecteur lié à la pression et à la vitesse acoustique particulaire par la relation suivante, donnée dans le domaine fréquentiel :

$$I(\omega) = \begin{vmatrix} I_x(\omega) \\ I_y(\omega) \\ I_z(\omega) \end{vmatrix} = \frac{1}{2} \mathrm{Re} \left\{ P^*(\omega) \begin{vmatrix} V_x(\omega) \\ V_y(\omega) \\ V_z(\omega) \end{vmatrix} \right\} \qquad (31)$$

où P*($\omega$) correspond au conjugué de la pression acoustique et les trois signaux $V_x(\omega)$, $V_y(\omega)$ et $V_z(\omega)$ représentent les trois composantes du vecteur de vitesse particulaire.

On considère le cas d'une onde plane progressive dont la pression est décrite par la relation suivante (dans laquelle $\vec{k}$ définit le vecteur d'onde) :

$$P(\omega, r, \theta, \phi) = P_0(\omega) e^{-j\vec{k}.\vec{r}} \qquad (32)$$

La vitesse particulaire se déduit de la relation d'Euler :

$$\vec{V}(\omega, r, \theta, \phi) = \frac{P(\omega, r, \theta, \phi)}{\rho c} \frac{\vec{k}}{|\vec{k}|} \qquad (33)$$

où $\rho$ est la masse volumique du milieu de propagation et c la célérité des ondes acoustiques.

Ainsi, l'intensité acoustique est donnée par :

$$I(\omega) = \begin{vmatrix} I_x(\omega) = \dfrac{|P_0(\omega)|^2}{2\rho c} \dfrac{k_x}{|\vec{k}|} \\[2mm] I_y(\omega) = \dfrac{|P_0(\omega)|^2}{2\rho c} \dfrac{k_y}{|\vec{k}|} \\[2mm] I_z(\omega) = \dfrac{|P_0(\omega)|^2}{2\rho c} \dfrac{k_z}{|\vec{k}|} \end{vmatrix} \qquad (34)$$

Le vecteur intensité I($\omega$) est colinéaire au vecteur d'onde, c'est-à-dire que sa direction est identique à la direction de propagation du signal sonore. La direction du vecteur d'intensité I($\omega$) permet donc d'accéder à une estimation de la direction de la source sonore.

La projection $V_{xy}$ sur le plan horizontal (x,y) de la vitesse particulaire est exprimée par :

$$V_{xy}(\omega) = \frac{1}{\rho c} \left[ X(\omega) \vec{e}_x + Y(\omega) \vec{e}_y \right] \qquad (35)$$

où X et Y sont les signaux captés par les microphones bidirectionnels 71 et 73, respectivement.

Les signaux associés à la pression et aux composantes de la vitesse particulaire sont obtenus par la relation :

$$P_0(\omega) = S_0(\omega)$$

$$X(\omega) = S_{bi1}(\omega)$$

$$Y(\omega) = S_{bi2}(\omega)$$

Les composantes de l'intensité acoustique dans le plan (x,y) s'en déduisent de la façon suivante :

$$I_x(\omega) = \frac{1}{2\rho c} \text{Re}\left[S_0^*(\omega) S_{bi1}(\omega)\right] \qquad (36)$$

$$I_y(\omega) = \frac{1}{2\rho c} \text{Re}\left[S_0^*(\omega) S_{bi2}(\omega)\right] \qquad (37)$$

Le vecteur intensité étant colinéaire au vecteur d'onde, la tangente inverse du rapport entre les composantes de l'intensité acoustique des expressions (36) et (37) donne une estimation de la coordonnée spatiale $\theta$ et ainsi :

$$\theta(\omega) = \tan^{-1}\left(\frac{I_y(\omega)}{I_x(\omega)}\right) \qquad (38)$$

L'information supplémentaire $\dfrac{I_y(\omega)}{I_x(\omega)}$ est reliée à la coordonnée spatiale $\theta$ par une fonction tangente inverse ce qui introduit une incertitude droite-gauche, qui est complémentaire de l'incertitude due au cosinus inverse dans l'expression (30).

La seconde unité de détermination peut alors, à une étape 85, utiliser de façon conjointe l'information supplémentaire et l'expression (30) afin de déterminer avec certitude la coordonnée spatiale $\theta$.

A cet effet, le tableau 1 ci-dessous illustre comment lever l'incertitude sur la coordonnée spatiale $\theta$.

| | $\theta$ Réel | $\theta$ estimé | | Opération à réaliser | |
|---|---|---|---|---|---|
| | | directivité | intensité | directivité | intensité |
| Cas | $\left[-\pi,-\dfrac{\pi}{2}\right]$ | $\left[\dfrac{\pi}{2},\pi\right]$ | $\left[0,\dfrac{\pi}{2}\right]$ | $-\theta$ | $\theta-\pi$ |
| | $\left[-\dfrac{\pi}{2},0\right]$ | $\left[0,\dfrac{\pi}{2}\right]$ | $\left[-\dfrac{\pi}{2},0\right]$ | $-\theta$ | $\theta$ |
| | $\left[0,\dfrac{\pi}{2}\right]$ | $\left[0,\dfrac{\pi}{2}\right]$ | $\left[0,\dfrac{\pi}{2}\right]$ | $\theta$ | $\theta$ |
| | $\left[\dfrac{\pi}{2},\pi\right]$ | $\left[\dfrac{\pi}{2},\pi\right]$ | $\left[-\dfrac{\pi}{2},0\right]$ | $\theta$ | $\theta+\pi$ |

Tableau 1

Les colonnes 2 et 3 du tableau 1 (regroupées sous «$\theta$ estimé») décrivent les différents cas de figure à l'issue des étapes 83 et 84, respectivement. La valeur réelle de la coordonnée spatiale $\theta$ est donnée par la première colonne (« $\theta$ réel »).

Les opérations à appliquer aux valeurs de la coordonnée spatiale $\theta$ estimées à l'issue des étapes 83 et 84 sont décrites dans les colonnes 4 et 5 (regroupées sous « Opération à réaliser »). Théoriquement, les coordonnées spatiales $\theta$ obtenues en effectuant les opérations des colonnes 4 et 5 sont les mêmes. Cependant, en pratique, en raison de la scène sonore à étudier et des conditions d'enregistrement (nombre de sources, niveau de bruit, complexité, etc), l'application de l'une ou l'autre des opérations décrites aux colonnes 4 et 5 peut donner une meilleure estimation de la coordonnée spatiale θ et est donc à privilégier.

Selon un troisième mode de réalisation spécifique de l'invention, l'unité microphonique 30 peut être un microphone ambisonique d'ordre 1, tel que le microphone décrit dans le brevet US 4,042,779 introduit précédemment. Plus généralement, l'unité microphonique peut être tout microphone ambisonique d'ordre supérieur à 1.

Un microphone ambisonique d'ordre 1 ou d'ordre supérieur à 1 plus généralement est apte à délivrer quatre signaux $b_{00}^1(t)$, $b_{11}^1(t)$, $b_{11}^{-1}(t)$ et $b_{10}^1(t)$ (dans le domaine temporel). Le signal $b_{00}^1(t)$ représente le signal de pression, tandis que les signaux $b_{11}^1(t)$, $b_{11}^{-1}(t)$ et $b_{10}^1(t)$ correspondent à trois microphones bidirectionnels selon les axes x, y et z respectivement.

Comme dans le second mode de réalisation présenté précédemment, les signaux captés par l'unité microphonique 30 sont utilisés par l'unité d'obtention 30 afin de synthétiser un dispositif microphonique virtuel en déduisant des premier, deuxième et troisième signaux correspondant à trois microphones cardioïdes virtuels.

Les premier, deuxième et troisième signaux, notés respectivement $s_{cardvirt1}$, $s_{cardvirt2}$ et $s_{cardvirt3}$ sont obtenus par l'unité d'obtention 21 à partir des signaux ambisoniques à l'ordre 1 de la façon suivante :

$$s_{cardvirt1}(t,\theta,\phi) = \frac{b_{00}^1(t)}{2}\left(1 + \frac{b_{11}^{-1}(t)}{b_{00}^1(t)}\right) \qquad (39)$$

$$s_{cardvirt2}(t,\theta,\phi) = \frac{b_{00}^1(t)}{2}\left(1 - \frac{b_{11}^{-1}(t)}{b_{00}^1(t)}\right) \qquad (40)$$

$$s_{cardvirt3}(t,\theta,\phi) = \frac{b_{00}^1(t)}{2}\left(1 + \frac{b_{10}^1(t)}{b_{00}^1(t)}\right) \qquad (41)$$

Tout comme expliqué précédemment, l'unité d'obtention 21 peut fenêtrer les premier, deuxième et troisième signaux et leur appliquer une transformée de Fourier afin de passer dans le domaine fréquentiel.

Les expressions suivantes pour le signal acoustique $s_0(t)$ généré par la source sonore à l'origine O et pour les coordonnées spatiales θ et φ sont alors obtenues par l'unité de déduction 22:

$$s_0(t) = b_{00}^1(t) \qquad (42)$$

$$\phi = \sin^{-1}\left[2\frac{s_{virtcard3}(t,\theta,\phi)}{s_0(t,\theta,\phi)} - 1\right] \qquad (43)$$

$$\theta = \cos^{-1}\left[\frac{s_{virtcard1}^2(t,\theta,\phi) - s_{virtcard2}^2(t,\theta,\phi)}{s_0(t)^2 \cdot \cos\phi}\right] \qquad (44)$$

A nouveau, l'expression (44) de la coordonnée spatiale θ présente une incertitude. Comme dans le deuxième mode de réalisation présenté précédemment, cette incertitude peut être levée en exploitant l'information supplémentaire liée à l'intensité acoustique dérivée des signaux du format B.

A cet effet, la première unité de détermination 23 détermine l'information supplémentaire liée à l'intensité acoustique dérivée des signaux du format B.

Les trois composantes de l'intensité acoustique sont calculées de la façon suivante :

$$I_x(\omega) = \frac{1}{2\rho c}\text{Re}\left[B_{00}^{1*}(\omega)B_{11}^1(\omega)\right] \qquad (45)$$

$$I_y(\omega) = \frac{1}{2\rho c}\text{Re}\left[B_{00}^{1*}(\omega)B_{11}^{-1}(\omega)\right] \qquad (46)$$

$$I_z(\omega) = \frac{1}{2\rho c} \mathrm{Re}\left[{B_{00}^1}^*(\omega) B_{01}^1(\omega)\right] \qquad (47)$$

Il est alors possible de déterminer la direction de la source sonore (coordonnées spatiales $\theta$ et $\phi$) grâce aux relations suivantes :

$$\theta(\omega) = \tan^{-1}\left(\frac{I_y(\omega)}{I_x(\omega)}\right) \qquad (48)$$

$$\phi(\omega) = \tan^{-1}\left(\frac{I_z(\omega)}{\sqrt{I_x^2(\omega) + I_y^2(\omega)}}\right) \qquad (49)$$

Ainsi, comme dans le deuxième mode de réalisation, la seconde unité de détermination 24 peut utiliser l'expression (44) et l'information supplémentaire de l'expression (48) pour déterminer la coordonnée spatiale $\theta$. A cet effet, le Tableau 1 détaillé précédemment peut être utilisé.

On remarque en outre que dans ce troisième mode de réalisation, la coordonnée spatiale d'élévation $\phi$ est déterminée à la fois par l'expression (43) et par l'expression (49). Ainsi, comme pour la coordonnée spatiale $\theta$, il est possible de privilégier l'une ou l'autre des méthodes d'estimation en fonction de la scène sonore à étudier (nombre de sources, niveau de bruit, complexité, etc) afin d'obtenir une meilleure localisation de la source sonore.

Selon un quatrième mode de réalisation spécifique de l'invention, l'unité microphonique 30 peut comprendre uniquement deux capteurs, qui sont des microphones cardioïdes (par exemple uniquement les microphones 51 et 52 de la figure 5).

Ainsi, un premier microphone cardioïde est dirigé selon l'axe x vers des valeurs positives et le second microphone cardioïde est dirigé selon l'axe x vers des valeurs négatives.

Les directivités des premier et deuxième microphones cardioïdes sont données par les expressions (5A) et (5B), et les signaux captés par ces deux microphones (qui, comme dans le premier mode de réalisation, sont également les premier et second signaux obtenus par l'unité d'obtention 21) sont donnés par les expressions (6A) et (6B). Afin de déterminer la coordonnée spatiale d'azimut $\theta$, l'expression (9) est utilisée en fixant la coordonnée spatiale d'élévation $\phi$ à une valeur arbitraire $\phi_0$. De préférence, la coordonnée spatiale d'élévation $\phi$ est fixée au plus proche du plan horizontal (valeur de $\phi$ faible), afin de minimiser l'erreur de localisation.

L'incertitude sur la coordonnée spatiale d'azimut $\theta$ due à l'expression (9) est résolue en décalant les premier et deuxième microphones cardioïdes sur l'axe y de façon à introduire un retard de la même manière que dans le premier mode de réalisation. L'information supplémentaire de l'expression (23) est alors utilisée afin d'obtenir l'expression (24) de la coordonnée spatiale d'azimut $\theta$, en fixant $\phi$ à $\phi_0$.

Selon un cinquième mode de réalisation spécifique de l'invention, l'unité microphonique 30 peut comprendre uniquement deux capteurs, qui sont des microphones bidirectionnels (par exemple uniquement les microphones 71 et 73 des figures 7a et 7b).

Dans ce cinquième mode de réalisation, un dispositif microphonique virtuel est synthétisé par l'unité d'obtention 21 afin d'obtenir des premier et second signaux à partir des signaux captés par les microphones bidirectionnels (expressions (25A) et (25B)), les premier et second signaux étant sous la forme de signaux captés par des microphones cardioïdes (expressions (26) et (27)).

L'expression (28), quant à elle, est approximée par l'expression suivante :

$$s_0(t) = \sqrt{s_{bi1}^2(t,\theta,\phi) + s_{bi2}^2(t,\theta,\phi)} \qquad (50)$$

A titre illustratif, cinq modes de réalisation ont été présentés ci-avant. Bien entendu, la présente invention ne se limite pas à ces exemples et s'étend à d'autres variantes, en fonction notamment des capteurs de l'unité microphonique 30.

Les résultats issus des cinq modes de réalisation présentés ci-avant permettent d'obtenir des estimations à chaque instant et pour chaque bande de fréquence d'au moins la coordonnée spatiale $\theta$. Afin d'éviter les sauts intempestifs des sources sonores dus aux erreurs de localisation, il est possible d'effectuer un lissage des résultats obtenus dans le domaine fréquentiel et dans le domaine temporel.

**Revendications**

1. Procédé de traitement de données pour la détermination d'au moins une coordonnée spatiale d'une source sonore émettant un signal sonore, dans un espace tridimensionnel, le procédé comprenant les étapes suivantes :

   - obtenir (10) au moins un premier signal et un deuxième signal à partir du signal sonore capté selon des directions de pointage différentes par un premier capteur (51;71) et un deuxième capteur (52;73) qui est décalé spatialement dudit premier capteur ;
   - déduire (11) des premier et deuxième signaux captés et de fonctions de directivité associées au premier et au deuxième capteur, une expression d'au moins une première coordonnée spatiale de la source sonore, ladite expression comportant une incertitude sur ladite coordonnée spatiale ;
   - déterminer (12) une information supplémentaire relative à la première coordonnée spatiale de la source sonore, à partir d'une comparaison entre des phases respectives ou entre des directions respectives de vecteur d'intensité acoustique des signaux captés par les premier et deuxième capteurs, ;
   - déterminer (13) ladite première coordonnée spatiale de la source sonore sur la base de l'expression et de l'information supplémentaire, la première coordonnée spatiale étant une coordonnée sphérique d'azimut $\theta$, l'incertitude étant une incertitude de signe, dans lequel les premier et deuxième capteurs sont sélectionnés parmi : des microphones cardioïdes, des microphones bidirectionnels, ou des capteurs intégrés dans un microphone ambisonique d'ordre 1 ou d'ordre supérieur à 1.

2. Procédé selon la revendication 1, dans lequel, l'espace étant orienté selon trois axes x, y et z, les premier et deuxième capteurs sont des microphones cardioïdes (51;52), le premier microphone cardioïde étant situé à une première position de l'espace et orienté selon l'axe x dans un sens croissant et le deuxième microphone cardioïde étant situé à une deuxième position de l'espace et orienté selon l'axe x dans un sens décroissant, le procédé comprenant initialement :

   - modifier la première ou la deuxième position en vue d'introduire un décalage selon l'axe y entre le premier microphone cardioïde et le deuxième microphone cardioïde,

   dans lequel les premier et deuxième signaux correspondent aux signaux captés respectivement par les premier et deuxième microphones cardioïdes, et dans lequel l'information supplémentaire est le signe d'une différence entre des phases respectives des premier et deuxième signaux.

3. Procédé selon la revendication 2, dans lequel un troisième signal $s_{card3}$ capté par un troisième microphone cardioïde (53) orienté selon l'axe z dans un sens croissant est obtenu, dans lequel une deuxième coordonnée spatiale de la source sonore est une coordonnée sphérique d'élévation $\phi$ et dans lequel, le premier signal capté par le premier microphone cardioïde (51) étant noté $s_{card1}$ et le deuxième signal capté par le deuxième microphone cardioïde (52) étant noté $s_{card2}$, les expressions des coordonnées sphériques d'azimut $\theta$ et d'élévation $\phi$ sont données par :

$$s_0(t) = s_{card1}(t,\theta,\phi) + s_{card2}(t,\theta,\phi)$$

$$\phi = \sin^{-1}[2\frac{s_{card3}(t,\theta,\phi)}{s_0(t,\theta,\phi)} - 1]$$

$$\theta = \cos^{-1}[\frac{s_{card1}^2(t,\theta,\phi) - s_{card2}^2(t,\theta,\phi)}{s_0(t)^2 \cdot \cos\phi}]$$

   et dans lequel le signe de la coordonnée sphérique d'azimut $\theta$ est donné par la différence de phases entre les premier et deuxième signaux.

4. Procédé selon la revendication 2, dans lequel une deuxième coordonnée spatiale de la source sonore est une coordonnée sphérique d'élévation $\phi$, dans lequel, le premier signal capté par le premier microphone cardioïde (51) étant noté $s_{card1}$ et le deuxième signal capté par le deuxième microphone cardioïde (52) étant noté $s_{card2}$, l'expression de la coordonnée sphérique d'azimut $\theta$ est donnée par :

$$s_0(t) = s_{card\,1}(t,\theta,\phi) + s_{card\,2}(t,\theta,\phi)$$

$$\theta = \cos^{-1}\left[\frac{s_{card1}^2(t,\theta,\phi) - s_{card2}^2(t,\theta,\phi)}{s_0(t)^2 \cdot \cos\phi}\right]$$

dans lequel la coordonnée sphérique d'élévation $\phi$ est fixée arbitrairement et dans lequel le signe de la coordonnée sphérique d'azimut $\theta$ est donné par la différence de phases entre les premier et deuxième signaux.

5. Procédé selon la revendication 1, dans lequel, l'espace étant orienté selon trois axes x, y et z, une deuxième coordonnée spatiale de la source sonore est une coordonnée sphérique d'élévation $\phi$, les premier et deuxième capteurs sont des capteurs bidirectionnels (71;73), ledit premier capteur étant orienté selon l'axe x et captant le signal noté $s_{bi1}$ et ledit deuxième capteur étant orienté selon l'axe y et captant le signal noté $s_{bi2}$, dans lequel un troisième capteur cardioïde (72) est dirigé selon l'axe z croissant et apte à capter un signal noté $s_{card3}$, dans lequel les premiers et deuxième signaux sont notés respectivement $s_{cardvirt1}$ et $s_{cardvirt2}$ et sont obtenus par:

$$s_{cardvirt1}(t,\theta,\phi) = \frac{s_0(t)}{2}\left(1 + \frac{s_{bi2}(t,\theta,\phi)}{s_0(t)}\right) \ ;$$

$$s_{cardvirt2}(t,\theta,\phi) = \frac{s_0(t)}{2}\left(1 - \frac{s_{bi2}(t,\theta,\phi)}{s_0(t)}\right) \ ;$$

avec

$$s_0(t) = \frac{s_{bi1}^2(t,\theta,\phi) + s_{bi2}^2(t,\theta,\phi) + 4s_{card3}^2(t,\theta,\phi)}{4s_{card3}^2(t,\theta,\phi)} \ ;$$

dans lequel les expressions des coordonnées sphériques d'azimut $\theta$ et d'élévation $\phi$ sont données par:

$$\phi = \sin^{-1}\left[2\frac{s_{card3}(t,\theta,\phi)}{s_0(t,\theta,\phi)} - 1\right]$$

$$\theta = \cos^{-1}\left[\frac{s_{cardvirt1}^2(t,\theta,\phi) - s_{cardvirt2}^2(t,\theta,\phi)}{s_0(t)^2 \cdot \cos\phi}\right]$$

dans lequel l'information supplémentaire est déterminée à partir d'une direction d'un vecteur d'intensité acoustique du signal sonore, ladite direction étant calculée à partir des signaux $s_{bi1}$ et $s_{bi2}$.

6. Procédé selon la revendication 1, dans lequel, l'espace étant orienté selon trois axes x, y et z, une deuxième coordonnée spatiale est une coordonnée sphérique d'élévation $\phi$, les premier et deuxième capteurs sont des capteurs bidirectionnels (71;73), ledit premier capteur étant orienté selon l'axe x et captant le signal noté $s_{bi1}$ et ledit deuxième capteur étant orienté selon l'axe y et captant le signal noté $s_{bi2}$, dans lequel les premiers et deuxième signaux sont notés respectivement $s_{cardvirt1}$ et $s_{cardvirt2}$ et sont obtenus de la manière suivante :

$$s_{cardvirt1}(t,\theta,\phi) = \frac{s_0(t)}{2}\left(1 + \frac{s_{bi2}(t,\theta,\phi)}{s_0(t)}\right) \ ;$$

$$s_{cardvirt2}(t,\theta,\phi) = \frac{s_0(t)}{2}\left(1 - \frac{s_{bi2}(t,\theta,\phi)}{s_0(t)}\right) \ ;$$

avec

$$s_0(t) = \sqrt{s_{bi1}^2(t,\theta,\phi) + s_{bi2}^2(t,\theta,\phi)} \; ;$$

dans lequel l'expression de la coordonnée sphérique d'azimut θ est donnée par:

$$\theta = \cos^{-1}\left[\frac{s_{cardvirt1}^2(t,\theta,\phi) - s_{cardvirt2}^2(t,\theta,\phi)}{s_0(t)^2 \cdot \cos\phi}\right]$$

dans lequel la coordonnée sphérique d'élévation φ est fixée arbitrairement ;
dans lequel l'information supplémentaire est déterminée à partir d'une direction d'un vecteur d'intensité acoustique du signal sonore, ladite direction étant calculée à partir des signaux $s_{bi1}$ et $s_{bi2}$.

**7.** Procédé selon l'une des revendications 5 et 6, dans lequel l'information supplémentaire est une deuxième expression de la coordonnée d'azimut θ :

$$\theta(\omega) = \tan^{-1}\left(\frac{I_y(\omega)}{I_x(\omega)}\right)$$

ω étant une pulsation du signal sonore émis par la source,
$I_y(\omega)$ étant la composante selon la coordonnée y du vecteur d'intensité acoustique du signal sonore, donnée par :

$$I_y(\omega) = \frac{1}{2\rho c}\text{Re}[S_0^*(\omega)S_{bi1}(\omega)] \; ;$$

$I_x(\omega)$ étant la composante selon la coordonnée x du vecteur d'intensité acoustique du signal sonore donnée par :

$$I_x(\omega) = \frac{1}{2\rho c}\text{Re}[S_0^*(\omega)S_{bi2}(\omega)] \; ;$$

où ρ est la masse volumique du milieu de propagation, c la célérité des ondes acoustiques et $S_0(\omega)$, $S_{bi1}(\omega)$ et $S_{bi2}(\omega)$ désignant les transformées de Fourier des signaux $s_0(t)$, $s_{bi}1(t)$ et $s_{bi2}(t)$ respectivement.

**8.** Procédé selon la revendication 1, dans lequel une deuxième coordonnée spatiale de la source sonore est une coordonnée sphérique d'élévation φ, les premier et deuxièmes capteurs font partie d'un microphone ambisonique, dans lequel, les signaux issus du microphone ambisonique sont un signal de pression $b_{00}^1(t)$ et trois signaux de gradient de pression $b_{11}^1(t)$, $b_{11}^{-1}(t)$ et $b_{10}^1(t)$ ;

dans lequel le premier signal, noté $s_{cardvirt1}$, et le deuxième signal, noté $s_{cardvirt2}$, et un troisième signal $s_{cardvirt3}$ sont obtenus à partir des signaux $b_{00}^1(t)$, $b_{11}^1(t)$, $b_{11}^{-1}(t)$ et $b_{10}^1(t)$ par :

$$s_{cardvirt1}(t,\theta,\phi) = \frac{b_{00}^1(t)}{2}\left(1 + \frac{b_{11}^{-1}(t)}{b_{00}^1(t)}\right) \; ;$$

$$s_{cardvirt2}(t,\theta,\phi) = \frac{b_{00}^1(t)}{2}\left(1 - \frac{b_{11}^{-1}(t)}{b_{00}^1(t)}\right) \; ;$$

$$s_{cardvirt3}(t,\theta,\phi) = \frac{b_{00}^1(t)}{2}(1 + \frac{b_{10}^1(t)}{b_{00}^1(t)}) \ ;$$

dans lequel les expressions des coordonnées sphériques d'azimut $\theta$ et d'élévation $\phi$ sont données par:

$$\phi = \sin^{-1}[2\frac{s_{cardvirt3}(t,\theta,\phi)}{s_0(t,\theta,\phi)} - 1]$$

$$\theta = \cos^{-1}[\frac{s_{cardvirt1}^2(t,\theta,\phi) - s_{cardvirt2}^2(t,\theta,\phi)}{s_0(t)^2 \cdot \cos\phi}]$$

avec $s_0 = b_{00}^1(t)$ ; dans lequel l'information supplémentaire est déterminée à partir d'une direction d'un vecteur d'intensité acoustique du signal sonore, la direction étant calculée à partir des signaux $b_{00}^1(t)$, $b_{11}^1(t)$ et $b_{11}^{-1}(t)$.

9. Procédé selon la revendication 8, dans lequel l'information supplémentaire est une deuxième expression de la coordonnée sphérique d'azimut $\theta$ :

$$\theta(\omega) = \tan^{-1}(\frac{I_y(\omega)}{I_x(\omega)})$$

$\omega$ étant une pulsation du signal sonore émis par la source,
$I_y(\omega)$ étant la composante selon la coordonnée y du vecteur d'intensité acoustique du signal sonore et étant donnée par :

$$I_y(\omega) = \frac{1}{2\rho c}Re[B_{00}^{1\ *}(\omega)B_{11}^{-1}(\omega)]$$

$I_x(\omega)$ étant la composante selon la coordonnée x du vecteur d'intensité acoustique du signal sonore et étant donnée par :

$$I_x(\omega) = \frac{1}{2\rho c}Re[B_{00}^{1\ *}(\omega)B_{11}^1(\omega)] \ ;$$

où $\rho$ est la masse volumique du milieu de propagation, c la célérité des ondes acoustiques et $B_{00}^1(\omega)$, $B_{11}^1(\omega)$ et $B_{11}^{-1}(\omega)$ désignant les transformées de Fourier des signaux $b_{00}^1(t)$, $b_{11}^1(t)$ et $b_{11}^{-1}(t)$ respectivement.

10. Procédé selon la revendication 8 ou 9, dans lequel une expression supplémentaire est déterminée pour la coordonnée sphérique d'élévation :

$$\phi(\omega) = \tan^{-1}\left(\frac{I_z(\omega)}{\sqrt{I_x^2(\omega) + I_y^2(\omega)}}\right)$$

$\omega$ étant une pulsation du signal sonore émis par la source, $I_y(\omega)$ étant donné par :

$$I_y(\omega) = \frac{1}{2\rho c} Re\left[B_{00}^{1}{}^{*}(\omega)B_{11}^{-1}(\omega)\right] ;$$

$I_x(\omega)$ étant donné par :

$$I_x(\omega) = \frac{1}{2\rho c} Re\left[B_{00}^{1}{}^{*}(\omega)B_{11}^{1}(\omega)\right] ;$$

$I_z(\omega)$ étant donné par :

$$I_z(\omega) = \frac{1}{2\rho c} Re\left[B_{00}^{1}{}^{*}(\omega)B_{01}^{1}(\omega)\right]$$

où $\rho$ est la masse volumique du milieu de propagation, c la célérité des ondes acoustiques et $B_{00}^{1}(\omega)$, $B_{11}^{1}(\omega)$, $B_{01}^{1}(\omega)$ et $B_{11}^{-1}(\omega)$ désignant les transformées de Fourier des signaux $b_{00}^{1}(t)$, $b_{11}^{1}(t)$, $b_{01}^{1}(t)$ et $b_{11}^{-1}(t)$ respectivement ;
et dans lequel la coordonnée sphérique d'élévation est déterminée à partir de ladite expression ou de ladite expression supplémentaire.

11. Produit programme d'ordinateur comprenant des instructions de code de programme enregistrées sur un support lisible par un ordinateur, pour l'exécution des étapes du procédé selon l'une quelconque des revendications 1 à 10.

12. Dispositif de traitement de données pour la détermination d'au moins une coordonnée spatiale d'une source sonore émettant un signal sonore, dans un espace tridimensionnel, le dispositif comprenant :

- une unité d'obtention (21) d'au moins un premier signal et un deuxième signal à partir du signal sonore capté selon des directions de pointage différentes par un premier capteur et un deuxième capteur qui est décalé spatialement dudit premier capteur ;
- une unité de déduction (22) pour déduire des premier et deuxième signaux captés et de fonctions de directivité associées au premier et au deuxième capteur, une expression d'au moins une première coordonnée spatiale de la source sonore, ladite expression comportant une incertitude sur ladite coordonnée spatiale ;
- une première unité de détermination (23) d'une information supplémentaire relative à la première coordonnée spatiale de la source sonore, à partir d'une comparaison entre des phases respectives ou entre des directions respectives de vecteur d'intensité acoustique des signaux captés par les premier et deuxième capteurs ;
- une seconde unité de détermination (24) de ladite première coordonnée spatiale de la source sonore sur la base de l'expression et de l'information supplémentaire,

la première coordonnée spatiale étant une coordonnée sphérique d'azimut θ, l'incertitude étant une incertitude de signe, dans lequel les premier et deuxième capteurs sont sélectionnés parmi : des microphones cardioïdes, des microphones bidirectionnels, ou des capteurs intégrés dans un microphone ambisonique d'ordre 1 ou d'ordre supérieur à 1.

13. Système d'acquisition de données sonores, comprenant une unité microphonique (30), ladite unité microphonique comprenant au moins un premier capteur (51 ;71) et un deuxième capteur (52 ;73) qui est décalé spatialement dudit premier capteur, aptes à capter des signaux sonores selon des directions de pointage différentes, ledit système comprenant en outre un dispositif de traitement de données (20) selon la revendication 12, dans lequel les premier et deuxième capteurs sont sélectionnés parmi : des microphones cardioïdes, des microphones bidirectionnels, ou des capteurs intégrés dans un microphone ambisonique d'ordre 1 ou d'ordre supérieur à 1.

14. Système selon la revendication 13, dans lequel les premier et deuxième capteurs sont des microphones cardioïdes (51 ;52).

15. Terminal de télécommunication comprenant un système selon la revendication 13.

**Patentansprüche**

1. Verfahren zur Verarbeitung von Daten zur Bestimmung wenigstens einer räumlichen Koordinate einer Schallquelle, die ein Schallsignal aussendet, in einem dreidimensionalen Raum, wobei das Verfahren die folgenden Schritte umfasst:

   - Gewinnen (10) wenigstens eines ersten Signals und eines zweiten Signals aus dem Schallsignal, das von einem ersten Sensor (51; 71) und einem zweiten Sensor (52; 73), welcher zum ersten Sensor räumlich versetzt ist, in unterschiedlichen Ausrichtungen erfasst wird;
   - Ableiten (11), aus dem ersten und dem zweiten erfassten Signal und aus Richtwirkungsfunktionen, die dem ersten und dem zweiten Sensor zugeordnet sind, eines Ausdrucks wenigstens einer ersten räumlichen Koordinate der Schallquelle, wobei dieser Ausdruck eine Unsicherheit in Bezug auf diese räumliche Koordinate aufweist;
   - Bestimmen (12) einer zusätzlichen Information, die sich auf die erste räumliche Koordinate der Schallquelle bezieht, aus einem Vergleich zwischen jeweiligen Phasen oder zwischen jeweiligen Richtungen des Schallintensitätsvektors der durch den ersten und den zweiten Sensor erfassten Signale;
   - Bestimmen (13) der ersten räumlichen Koordinate der Schallquelle auf der Basis des Ausdrucks und der zusätzlichen Information,

   wobei die erste räumliche Koordinate eine sphärische Koordinate Azimut $\theta$ ist und die Unsicherheit eine Vorzeichenunsicherheit ist, wobei der erste und der zweite Sensor ausgewählt sind aus: Kardioidmikrofonen, bidirektionalen Mikrofonen oder Sensoren, die in ein Ambisonic-Mikrofon erster Ordnung oder einer Ordnung höher als 1 integriert sind.

2. Verfahren nach Anspruch 1, wobei, wenn der Raum entlang von drei Achsen x, y und z ausgerichtet ist, der erste und der zweite Sensor Kardioidmikrofone (51; 52) sind, das erste Kardioidmikrofon sich an einer ersten Position des Raumes befindet und entlang der x-Achse in einer zunehmenden Richtung ausgerichtet ist und das zweite Kardioidmikrofon sich an einer zweiten Position des Raumes befindet und entlang der x-Achse in einer abnehmenden Richtung ausgerichtet ist, das Verfahren am Anfang umfasst:

   - Ändern der ersten oder der zweiten Position zum Erzeugen eines Versatzes entlang der y-Achse zwischen dem ersten Kardioidmikrofon und dem zweiten Kardioidmikrofon,

   wobei das erste und das zweite Signal den Signalen entsprechen, die von dem ersten bzw. zweiten Kardioidmikrofon erfasst wurden, und wobei die zusätzliche Information das Vorzeichen einer Differenz zwischen jeweiligen Phasen des ersten und zweiten Signals ist.

3. Verfahren nach Anspruch 2, wobei ein drittes Signal $s_{card3}$, das von einem entlang der z-Achse in einer zunehmenden Richtung ausgerichteten dritten Kardioidmikrofon (53) erfasst wurde, gewonnen wird, wobei eine zweite räumliche Koordinate der Schallquelle eine sphärische Koordinate Elevation $\phi$ ist und wobei, wenn das vom ersten Kardioidmikrofon (51) erfasste erste Signal mit $s_{card1}$ bezeichnet wird und das vom zweiten Kardioidmikrofon (52) erfasste zweite Signal mit $s_{card2}$ bezeichnet wird, die Ausdrücke der sphärischen Koordinaten Azimut $\theta$ und Elevation $\phi$ gegeben sind durch:

$$s_0(t) = s_{card1}(t, \theta, \phi) + s_{card2}(t, \theta, \phi)$$

$$\phi = \sin^{-1}\left[2\frac{s_{card3}(t,\theta,\phi)}{s_0(t,\theta,\phi)} - 1\right]$$

$$\theta = \cos^{-1}\left[\frac{s_{card1}^2(t,\theta,\phi) - s_{card2}^2(t,\theta,\phi)}{s_0(t)^2 \cdot \cos\phi}\right]$$

und wobei das Vorzeichen der sphärischen Koordinate Azimut θ durch die Phasendifferenz zwischen dem ersten und dem zweiten Signal gegeben ist.

4. Verfahren nach Anspruch 2, wobei eine zweite räumliche Koordinate der Schallquelle eine sphärische Koordinate Elevation φ ist, wobei, wenn das vom ersten Kardioidmikrofon (51) erfasste erste Signal mit $s_{card1}$ bezeichnet wird und das vom zweiten Kardioidmikrofon (52) erfasste zweite Signal mit $s_{card2}$ bezeichnet wird, der Ausdruck der sphärischen Koordinate Azimut θ gegeben ist durch:

$$s_0(t) = s_{card1}(t,\theta,\phi) + s_{card2}(t,\theta,\phi)$$

$$\theta = \cos^{-1}\left[\frac{s_{card1}^2(t,\theta,\phi)-s_{card2}^2(t,\theta,\phi)}{s_0(t)^2\cdot\cos\phi}\right]$$

wobei die sphärische Koordinate Elevation φ beliebig festgelegt ist und wobei das Vorzeichen der sphärischen Koordinate Azimut θ durch die Phasendifferenz zwischen dem ersten und dem zweiten Signal gegeben ist.

5. Verfahren nach Anspruch 1, wobei, wenn der Raum entlang von drei Achsen x, y und z ausgerichtet ist, eine zweite räumliche Koordinate der Schallquelle eine sphärische Koordinate Elevation φ ist, der erste und der zweite Sensor bidirektionale Sensoren (71; 73) sind, wobei der erste Sensor entlang der x-Achse ausgerichtet ist und das mit $s_{bi1}$ bezeichnete Signal erfasst und der zweite Sensor entlang der y-Achse ausgerichtet ist und das mit $s_{bi2}$ bezeichnete Signal erfasst,
wobei ein dritter Kardioidsensor (72) entlang der zunehmenden z-Achse gerichtet ist und in der Lage ist, ein mit $s_{card3}$ bezeichnetes Signal zu erfassen, wobei das erste und das zweite Signal mit $s_{cardvirt1}$ bzw. $s_{cardvirt2}$ bezeichnet sind und erhalten werden durch:

$$s_{cardvirt1}(t,\theta,\phi) = \frac{s_0(t)}{2}\left(1 + \frac{s_{bi2}(t,\theta,\phi)}{s_0(t)}\right);$$

$$s_{cardvirt2}(t,\theta,\phi) = \frac{s_0(t)}{2}\left(1 - \frac{s_{bi2}(t,\theta,\phi)}{s_0(t)}\right);$$

mit

$$s_0(t) = \frac{s_{bi1}^2(t,\theta,\phi)+s_{bi2}^2(t,\theta,\phi)+4s_{card3}^2(t,\theta,\phi)}{4s_{card3}^2(t,\theta,\phi)}$$

wobei die Ausdrücke der sphärischen Koordinaten Azimut θ und Elevation φ gegeben sind durch:

$$\phi = \sin^{-1}\left[2\frac{s_{card3}(t,\theta,\phi)}{s_0(t,\theta,\phi)} - 1\right],$$

$$\theta = \cos^{-1}\left[\frac{s_{cardvirt1}^2(t,\theta,\phi)-s_{cardvirt2}^2(t,\theta,\phi)}{s_0(t)^2\cdot\cos\phi}\right],$$

wobei die zusätzliche Information aus einer Richtung eines Schallintensitätsvektors des Schallsignals bestimmt wird, wobei diese Richtung aus den Signalen $s_{bi1}$ und $s_{bi2}$ berechnet wird.

6. Verfahren nach Anspruch 1, wobei, wenn der Raum entlang von drei Achsen x, y und z ausgerichtet ist, eine zweite räumliche Koordinate eine sphärische Koordinate Elevation φ ist, der erste und der zweite Sensor bidirektionale Sensoren (71; 73) sind, wobei der erste Sensor entlang der x-Achse ausgerichtet ist und das mit $s_{bi1}$ bezeichnete Signal erfasst und der zweite Sensor entlang der y-Achse ausgerichtet ist und das mit $s_{bi2}$ bezeichnete Signal erfasst,

wobei das erste und das zweite Signal mit $s_{cardvirt1}$ bzw. $s_{cardvirt2}$ bezeichnet sind und auf folgende Weise erhalten werden:

$$s_{cardvirt1}(t,\theta,\phi) = \frac{s_0(t)}{2}\left(1 + \frac{s_{bi2}(t,\theta,\phi)}{s_0(t)}\right);$$

$$s_{cardvirt2}(t,\theta,\phi) = \frac{s_0(t)}{2}\left(1 - \frac{s_{bi2}(t,\theta,\phi)}{s_0(t)}\right);$$

mit

$$s_0(t) = \sqrt{s_{bi1}^2(t,\theta,\phi) + s_{bi2}^2(t,\theta,\phi)};$$

wobei der Ausdruck der sphärischen Koordinate Azimut $\theta$ gegeben ist durch:

$$\theta = \cos^{-1}\left[\frac{s_{cardvirt1}^2(t,\theta,\phi) - s_{cardvirt2}^2(t,\theta,\phi)}{s_0(t)^2 \cdot \cos\phi}\right],$$

wobei die sphärische Koordinate Elevation $\phi$ beliebig festgelegt ist;
wobei die zusätzliche Information aus einer Richtung eines Schallintensitätsvektors des Schallsignals bestimmt wird, wobei diese Richtung aus den Signalen $s_{bi1}$ und $s_{bi2}$ berechnet wird.

7. Verfahren nach einem der Ansprüche 5 und 6, wobei die zusätzliche Information ein zweiter Ausdruck der Koordinate Azimut $\theta$ ist:

$$\theta(\omega) = \tan^{-1}\left(\frac{I_y(\omega)}{I_x(\omega)}\right),$$

wobei $\omega$ eine Kreisfrequenz des von der Quelle ausgesendeten Schallsignals ist,
$I_y(\omega)$ die Komponente entlang der Koordinate y des Schallintensitätsvektors des Schallsignals ist, die gegeben ist durch:

$$I_y(\omega) = \frac{1}{2\rho c}\mathrm{Re}[S_0^*(\omega)S_{bi1}(\omega)];$$

$I_x(\omega)$ die Komponente entlang der Koordinate x des Schallintensitätsvektors des Schallsignals ist, die gegeben ist durch:

$$I_x(\omega) = \frac{1}{2\rho c}\mathrm{Re}[S_0^*(\omega)S_{bi2}(\omega)];$$

wobei $\rho$ die Dichte des Ausbreitungsmediums ist, c die Geschwindigkeit der Schallwellen ist und $S_0(\omega)$, $S_{b1}(\omega)$ und $S_{b2}(\omega)$ die Fouriertransformierten der Signale $s_0(t)$, $s_{bi1}(t)$ bzw. $s_{bi2}(t)$ bezeichnen.

8. Verfahren nach Anspruch 1, wobei eine zweite räumliche Koordinate der Schallquelle eine sphärische Koordinate Elevation $\phi$ ist, der erste und der zweite Sensor Teile eines Ambisonic-Mikrofons sind, wobei die von dem Ambisonic-Mikrofon abgegebenen Signale ein Drucksignal $b_{00}^1(t)$ und drei Druckgradientensignale $b_{11}^1(t)$, $b_{11}^{-1}(t)$ und $b_{10}^1(t)$ sind; wobei das erste Signal, mit $s_{cardvirt1}$ bezeichnet, und das zweite Signal, mit $s_{cardvirt2}$ bezeichnet, sowie ein drittes Signal $s_{cardvirt3}$ aus den Signalen $b_{00}^1(t)$, $b_{11}^1(t)$, $b_{11}^{-1}(t)$ und $b_{10}^1(t)$ erhalten werden durch:

$$s_{cardvirt1}(t,\theta,\phi) \;=\; \frac{b_{00}^1(t)}{2}\left(1 + \frac{b_{11}^{-1}(t)}{b_{00}^1(t)}\right);$$

$$s_{cardvirt2}(t,\theta,\phi) \;=\; \frac{b_{00}^1(t)}{2}\left(1 - \frac{b_{11}^{-1}(t)}{b_{00}^1(t)}\right);$$

$$s_{cardvirt3}(t,\theta,\phi) \;=\; \frac{b_{00}^1(t)}{2}\left(1 + \frac{b_{10}^1(t)}{b_{00}^1(t)}\right);$$

wobei die Ausdrücke der sphärischen Koordinaten Azimut $\theta$ und Elevation $\phi$ gegeben sind durch:

$$\phi \;=\; \sin^{-1}\left[2\,\frac{s_{cardvirt3}(t,\theta,\phi)}{s_0(t,\theta,\phi)} - 1\right],$$

$$\theta \;=\; \cos^{-1}\left[\frac{s_{cardvirt1}^2(t,\theta,\phi) - s_{cardvirt2}^2(t,\theta,\phi)}{s_0(t)^2\cdot\cos\phi}\right],$$

mit

$$s_0 \;=\; b_{00}^1(t);$$

wobei die zusätzliche Information aus einer Richtung eines Schallintensitätsvektors des Schallsignals bestimmt wird, wobei die Richtung aus den Signalen $b_{00}^1(t)$, $b_{11}^1(t)$ und $b_{11}^{-1}(t)$ berechnet wird.

**9.** Verfahren nach Anspruch 8, wobei die zusätzliche Information ein zweiter Ausdruck der sphärischen Koordinate Azimut $\theta$ ist:

$$\theta(\omega) \;=\; \tan^{-1}\!\left(\frac{I_y(\omega)}{I_x(\omega)}\right),$$

wobei $\omega$ eine Kreisfrequenz des von der Quelle ausgesendeten Schallsignals ist,
$I_y(\omega)$ die Komponente entlang der Koordinate y des Schallintensitätsvektors des Schallsignals ist und gegeben ist durch:

$$I_y(\omega) \;=\; \frac{1}{2\rho c}\,\mathrm{Re}\!\left[B_{00}^{1}{}^*(\omega)B_{11}^{-1}(\omega)\right];$$

$I_x(\omega)$ die Komponente entlang der Koordinate x des Schallintensitätsvektors des Schallsignals ist und gegeben ist durch:

$$I_x(\omega) \;=\; \frac{1}{2\rho c}\,\mathrm{Re}\!\left[B_{00}^{1}{}^*(\omega)B_{11}^{1}(\omega)\right];$$

wobei $\rho$ die Dichte des Ausbreitungsmediums ist, c die Geschwindigkeit der Schallwellen ist und $B_{00}^1(\omega)$,

$B_{11}^1(\omega)$ und $B_{11}^{-1}(\omega)$ die Fouriertransformierten der Signale $b_{00}^1(t)$, $b_{11}^1(t)$ bzw. $b_{11}^{-1}(t)$ bezeichnen.

10. Verfahren nach Anspruch 8 oder 9, wobei ein zusätzlicher Ausdruck für die sphärische Koordinate Elevation bestimmt wird:

$$\phi(\omega) = \tan^{-1}\left(\frac{I_z(\omega)}{\sqrt{I_x^2(\omega)+I_y^2(\omega)}}\right),$$

wobei $\omega$ eine Kreisfrequenz des von der Quelle ausgesendeten Schallsignals ist, $I_y(\omega)$ gegeben ist durch:

$$\bar{I}_y(\omega) = \frac{1}{2\rho c}\text{Re}[B_{00}^{1}{}^*(\omega)B_{11}^{-1}(\omega)];$$

$I_x(\omega)$ gegeben ist durch:

$$I_x(\omega) = \frac{1}{2\rho c}\text{Re}[B_{00}^{1}{}^*(\omega)B_{11}^{1}(\omega)];$$

$I_z(\omega)$ gegeben ist durch:

$$I_z(\omega) = \frac{1}{2\rho c}\text{Re}[B_{00}^{1}{}^*(\omega)B_{01}^{1}(\omega)],$$

wobei $\rho$ die Dichte des Ausbreitungsmediums ist, $c$ die Geschwindigkeit der Schallwellen ist und $B_{00}^1(\omega)$, $B_{11}^1(\omega)$, $B_{01}^1(\omega)$ und $B_{11}^{-1}(\omega)$ die Fouriertransformierten der Signale $b_{00}^1(t)$, $b_{11}^1(t)$, $b_{01}^1(t)$ bzw. $b_{11}^{-1}(t)$ bezeichnen;
und wobei die sphärische Koordinate Elevation aus dem Ausdruck oder dem zusätzlichen Ausdruck bestimmt wird.

11. Computerprogrammprodukt, welches auf einem computerlesbaren Medium aufgezeichnete Programmcodeanweisungen zur Ausführung der Schritte des Verfahrens nach einem der Ansprüche 1 bis 10 umfasst.

12. Vorrichtung zur Verarbeitung von Daten zur Bestimmung wenigstens einer räumlichen Koordinate einer Schallquelle, die ein Schallsignal aussendet, in einem dreidimensionalen Raum, wobei die Vorrichtung umfasst:

   - eine Gewinnungseinheit (21) zum Gewinnen wenigstens eines ersten Signals und eines zweiten Signals aus dem Schallsignal, das von einem ersten Sensor und einem zweiten Sensor, welcher zum ersten Sensor räumlich versetzt ist, in unterschiedlichen Ausrichtungen erfasst wird;
   - eine Ableitungseinheit (22) zum Ableiten, aus dem ersten und dem zweiten erfassten Signal und aus Richtwirkungsfunktionen, die dem ersten und dem zweiten Sensor zugeordnet sind, eines Ausdrucks wenigstens einer ersten räumlichen Koordinate der Schallquelle, wobei dieser Ausdruck eine Unsicherheit in Bezug auf diese räumliche Koordinate aufweist;
   - eine erste Bestimmungseinheit (23) zum Bestimmen einer zusätzlichen Information, die sich auf die erste räumliche Koordinate der Schallquelle bezieht, aus einem Vergleich zwischen jeweiligen Phasen oder zwischen jeweiligen Richtungen des Schallintensitätsvektors der durch den ersten und den zweiten Sensor erfassten Signale;
   - eine zweite Bestimmungseinheit (24) zum Bestimmen der ersten räumlichen Koordinate der Schallquelle auf der Basis des Ausdrucks und der zusätzlichen Information,

wobei die erste räumliche Koordinate eine sphärische Koordinate Azimut θ ist und die Unsicherheit eine Vorzeichenunsicherheit ist, wobei der erste und der zweite Sensor ausgewählt sind aus: Kardioidmikrofonen, bidirektionalen Mikrofonen oder Sensoren, die in ein Ambisonic-Mikrofon erster Ordnung oder einer Ordnung höher als 1 integriert sind.

13. System zur Erfassung von Schalldaten, welches eine Mikrofoneinheit (30) umfasst, wobei die Mikrofoneinheit wenigstens einen ersten Sensor (51; 71) und einen zweiten Sensor (52; 73), welcher zum ersten Sensor räumlich versetzt ist, umfasst, die in der Lage sind, Schallsignale in unterschiedlichen Ausrichtungen zu erfassen, wobei das System außerdem eine Vorrichtung zur Verarbeitung von Daten (20) nach Anspruch 12 umfasst, wobei der erste und der zweite Sensor ausgewählt sind aus: Kardioidmikrofonen, bidirektionalen Mikrofonen oder Sensoren, die in ein Ambisonic-Mikrofon erster Ordnung oder einer Ordnung höher als 1 integriert sind.

14. System nach Anspruch 13, wobei der erste und der zweite Sensor Kardioidmikrofone (51; 52) sind.

15. Telekommunikationsendgerät, welches ein System nach Anspruch 13 umfasst.

**Claims**

1. Data processing method for determining at least one spatial coordinate of an audio source emitting an audio signal, in a three-dimensional space, the method comprising the following steps:

   - obtaining (10) at least a first signal and a second signal from the audio signal captured in different pointing directions by a first sensor (51; 71) and a second sensor (52; 73) that is spatially offset from said first sensor;
   - deducing (11), from the first and second captured signals and from directivity functions associated with the first and with the second sensor, an expression of at least a first spatial coordinate of the audio source, said expression containing an uncertainty as to said spatial coordinate;
   - determining (12) an additional item of information in relation to the first spatial coordinate of the audio source, from a comparison between respective phases or between respective acoustic intensity vector directions of the signals captured by the first and second sensors;
   - determining (13) said first spatial coordinate of the audio source on the basis of the expression and of the additional item of information, the first spatial coordinate being a spherical coordinate of azimuth θ, the uncertainty being a sign uncertainty, wherein the first and second sensors are selected from among: cardioid microphones, bidirectional microphones, or sensors integrated into a 1$^{st}$-order or higher than 1$^{st}$-order ambisonic microphone.

2. Method according to Claim 1, wherein, the space being oriented along three axes x, y and z, the first and second sensors are cardioid microphones (51; 52), the first cardioid microphone being situated at a first position in space and oriented along the axis x in an ascending direction and the second cardioid microphone being situated at a second position in space and oriented along the axis x in a descending direction, the method initially comprising:

   - modifying the first or the second position for the purpose of introducing an offset along the axis y between the first cardioid microphone and the second cardioid microphone,

   wherein the first and second signals correspond to the signals captured respectively by the first and second cardioid microphones, and wherein the additional item of information is the sign of a difference between respective phases of the first and second signals.

3. Method according to Claim 2, wherein a third signal $s_{card3}$ captured by a third cardioid microphone (53) oriented along the axis z in an ascending direction is obtained, wherein a second spatial coordinate of the audio source is a spherical coordinate of elevation φ and wherein, the first signal captured by the first cardioid microphone (51) being denoted $s_{card1}$ and the second signal captured by the second cardioid microphone (52) being denoted $s_{card2}$, the expressions of the spherical coordinates of azimuth θ and of elevation φ are given by:

$$s_0(t) = s_{card1}(t, \theta, \phi) + s_{card2}(t, \theta, \phi)$$

$$\phi = \sin^{-1}[2\frac{s_{card3}(t,\theta,\phi)}{s_0(t,\theta,\phi)} - 1]$$

$$\theta = \cos^{-1}[\frac{s_{card1}^2(t,\theta,\phi) - s_{card2}^2(t,\theta,\phi)}{s_0(t)^2 \cdot \cos\phi}]$$

and wherein the sign of the spherical coordinate of azimuth $\theta$ is given by the phase difference between the first and second signals.

4. Method according to Claim 2, wherein a second spatial coordinate of the audio source is a spherical coordinate of elevation $\phi$, wherein, the first signal captured by the first cardioid microphone (51) being denoted $s_{card1}$ and the second signal captured by the second cardioid microphone (52) being denoted $s_{card2}$, the expression of the spherical coordinate of azimuth $\theta$ is given by:

$$s_0(t) = s_{card1}(t,\theta,\phi) + s_{card2}(t,\theta,\phi)$$

$$\theta = \cos^{-1}[\frac{s_{card1}^2(t,\theta,\phi) - s_{card2}^2(t,\theta,\phi)}{s_0(t)^2 \cdot \cos\phi}]$$

wherein the spherical coordinate of elevation $\phi$ is set arbitrarily, and wherein the sign of the spherical coordinate of azimuth $\theta$ is given by the phase difference between the first and second signals.

5. Method according to Claim 1, wherein, the space being oriented along three axes x, y and z, a second spatial coordinate of the audio source is a spherical coordinate of elevation $\phi$, the first and second sensors are bidirectional sensors (71; 73), said first sensor being oriented along the axis x and capturing the signal denoted $s_{bi1}$ and said second sensor being oriented along the axis y and capturing the signal denoted $s_{bi2}$, wherein a third cardioid sensor (72) is directed along the ascending axis z and able to capture a signal denoted $s_{card3}$, wherein the first and second signals are respectively denoted $s_{cardvirt1}$ and $s_{cardvirt2}$ and are obtained by:

$$s_{cardvirt1}(t,\theta,\phi) = \frac{s_0(t)}{2}(1 + \frac{s_{bi2}(t,\theta,\phi)}{s_0(t)}) \ ;$$

$$s_{cardvirt2}(t,\theta,\phi) = \frac{s_0(t)}{2}(1 - \frac{s_{bi2}(t,\theta,\phi)}{s_0(t)}) \ ;$$

where

$$s_0(t) = \frac{s_{bi1}^2(t,\theta,\phi) + s_{bi2}^2(t,\theta,\phi) + 4s_{card3}^2(t,\theta,\phi)}{4s_{card3}^2(t,\theta,\phi)} \ ;$$

wherein the expressions of the spherical coordinates of azimuth $\theta$ and of elevation $\phi$ are given by:

$$\phi = \sin^{-1}[2\frac{s_{card3}(t,\theta,\phi)}{s_0(t,\theta,\phi)} - 1]$$

$$\theta = \cos^{-1}\left[\frac{s_{cardvirt1}^2(t,\theta,\phi) - s_{cardvirt2}^2(t,\theta,\phi)}{s_0(t)^2 \cdot \cos\phi}\right]$$

wherein the additional item of information is determined from a direction of an acoustic intensity vector of the audio signal, said direction being calculated from the signals $s_{bi1}$ and $s_{bi2}$.

6. Method according to Claim 1, wherein, the space being oriented along three axes x, y and z, a second spatial coordinate is a spherical coordinate of elevation $\phi$, the first and second sensors are bidirectional sensors (71; 73), said first sensor being oriented along the axis x and capturing the signal denoted $s_{bi1}$ and said second sensor being oriented along the axis y and capturing the signal denoted $s_{bi2}$, wherein the first and second signals are respectively denoted $s_{cardvirt1}$ and $s_{cardvirt2}$ and are obtained as follows:

$$s_{cardvirt1}(t,\theta,\phi) = \frac{s_0(t)}{2}\left(1 + \frac{s_{bi2}(t,\theta,\phi)}{s_0(t)}\right) \; ;$$

$$s_{cardvirt2}(t,\theta,\phi) = \frac{s_0(t)}{2}\left(1 - \frac{s_{bi2}(t,\theta,\phi)}{s_0(t)}\right) \; ;$$

where

$$s_0(t) = \sqrt{s_{bi1}^2(t,\theta,\phi) + s_{bi2}^2(t,\theta,\phi)} \; ;$$

wherein the expression of the spherical coordinate of azimuth $\theta$ is given by:

$$\theta = \cos^{-1}\left[\frac{s_{cardvirt1}^2(t,\theta,\phi) - s_{cardvirt2}^2(t,\theta,\phi)}{s_0(t)^2 \cdot \cos\phi}\right]$$

wherein the spherical coordinate of elevation $\phi$ is set arbitrarily;
wherein the additional item of information is determined from a direction of an acoustic intensity vector of the audio signal, said direction being calculated from the signals $s_{bi1}$ and $s_{bi2}$.

7. Method according to either of Claims 5 and 6, wherein the additional item of information is a second expression of the coordinate of azimuth $\theta$:

$$\theta(\omega) = \tan^{-1}\left(\frac{I_y(\omega)}{I_x(\omega)}\right)$$

$\omega$ being an angular frequency of the audio signal emitted by the source,
$I_y(\omega)$ being the component along the y coordinate of the acoustic intensity vector of the audio signal, given by:

$$I_y(\omega) = \frac{1}{2\rho c}\text{Re}[S_0^*(\omega)S_{bi1}(\omega)] \; ;$$

$I_x(\omega)$ being the component along the x coordinate of the acoustic intensity vector of the audio signal given by:

$$I_x(\omega) = \frac{1}{2\rho c} \mathrm{Re}[S_0^*(\omega) S_{bi2}(\omega)] \; ;$$

where $\rho$ is the bulk density of the propagation medium, c is the speed of sound and $S_0(\omega)$, $S_{bi1}(\omega)$ and $S_{bi2}(\omega)$ denoting the Fourier transforms of the signals $s_0(t$, $s_{bi1}(t)$ and $s_{bi2}(t)$, respectively.

8. Method according to Claim 1, wherein a second spatial coordinate of the audio source is a spherical coordinate of elevation $\phi$, the first and second sensors form part of an ambisonic microphone, wherein the signals from the ambisonic microphone are a pressure signal $b_{00}^1(t)$ and three pressure gradient signals $b_{11}^1(t)$, $b_{11}^{-1}(t)$ and $b_{10}^1(t)$; wherein the first signal, denoted $s_{cardvirt1}$, and the second signal, denoted $s_{cardvirt2}$, and a third signal $s_{cardvirt3}$ are obtained from the signals $b_{00}^1(t)$, $b_{11}^1(t)$, $b_{11}^{-1}(t)$ and $b_{10}^1(t)$ by:

$$s_{cardvirt1}(t,\theta,\phi) = \frac{b_{00}^1(t)}{2}(1 + \frac{b_{11}^{-1}(t)}{b_{00}^1(t)}) \; ;$$

$$s_{cardvirt2}(t,\theta,\phi) = \frac{b_{00}^1(t)}{2}(1 - \frac{b_{11}^{-1}(t)}{b_{00}^1(t)}) \; ;$$

$$s_{cardvirt3}(t,\theta,\phi) = \frac{b_{00}^1(t)}{2}(1 + \frac{b_{10}^1(t)}{b_{00}^1(t)}) \; ;$$

wherein the expressions of the spherical coordinates of azimuth $\theta$ and of elevation $\phi$ are given by:

$$\phi = \sin^{-1}[2\frac{s_{cardvirt3}(t,\theta,\phi)}{s_0(t,\theta,\phi)} - 1]$$

$$\theta = \cos^{-1}[\frac{s_{cardvirt1}^2(t,\theta,\phi) - s_{cardvirt2}^2(t,\theta,\phi)}{s_0(t)^2 \cdot \cos\phi}]$$

where $s_0 = b_{00}^1(t)$; wherein the additional item of information is determined from a direction of an acoustic intensity vector of the audio signal, the direction being calculated from the signals $b_{00}^1(t)$, $b_{11}^1(t)$ and $b_{11}^{-1}(t)$.

9. Method according to Claim 8, wherein the additional item of information is a second expression of the spherical coordinate of azimuth $\theta$:

$$\theta(\omega) = \tan^{-1}(\frac{I_y(\omega)}{I_x(\omega)})$$

$\omega$ being an angular frequency of the audio signal emitted by the source,
$I_y(\omega)$ being the component along the y coordinate of the acoustic intensity vector of the audio signal and being given by:

$$I_y(\omega) = \frac{1}{2\rho c} \mathrm{Re}\left[B_{00}^{1}{}^{*}(\omega)B_{11}^{-1}(\omega)\right]$$

$I_x(\omega)$ being the component along the x coordinate of the acoustic intensity vector of the audio signal and being given by:

$$I_x(\omega) = \frac{1}{2\rho c} \mathrm{Re}\left[B_{00}^{1}{}^{*}(\omega)B_{11}^{1}(\omega)\right] ;$$

where $\rho$ is the bulk density of the propagation medium, c is the speed of sound and $B_{00}^{1}(\omega)$, $B_{11}^{1}(\omega)$ and $B_{11}^{-1}(\omega)$ denoting the Fourier transforms of the signals $b_{00}^{1}(t)$, $b_{11}^{1}(t)$ and $b_{11}^{-1}(t)$, respectively.

10. Method according to Claim 8 or 9, wherein an additional expression is determined for the spherical coordinate of elevation:

$$\phi(\omega) = \tan^{-1}\left(\frac{I_z(\omega)}{\sqrt{I_x^2(\omega) + I_y^2(\omega)}}\right)$$

$\omega$ being an angular frequency of the audio signal emitted by the source,
$I_y(\omega)$ being given by:

$$I_y(\omega) = \frac{1}{2\rho c} \mathrm{Re}\left[B_{00}^{1}{}^{*}(\omega)B_{11}^{-1}(\omega)\right] ;$$

$I_x(\omega)$ being given by:

$$I_x(\omega) = \frac{1}{2\rho c} \mathrm{Re}\left[B_{00}^{1}{}^{*}(\omega)B_{11}^{1}(\omega)\right] ;$$

$I_z(\omega)$ being given by:

$$I_z(\omega) = \frac{1}{2\rho c} \mathrm{Re}\left[B_{00}^{1}{}^{*}(\omega)B_{01}^{1}(\omega)\right]$$

where $\rho$ is the bulk density of the propagation medium, c is the speed of sound and $B_{00}^{1}(\omega)$, $B_{11}^{1}(\omega)$, $B_{01}^{1}(\omega)$ and $B_{11}^{-1}(\omega)$ denoting the Fourier transforms of the signals $b_{00}^{1}(t)$, $b_{11}^{1}(t)$, $b_{01}^{1}(t)$ and $b_{11}^{-1}(t)$, respectively; and wherein the spherical coordinate of elevation is determined from said expression or from said additional expression.

11. Computer program product comprising program code instructions recorded on a computer-readable support for executing the steps of the method according to any one of Claims 1 to 10.

12. Data processing device for determining at least one spatial coordinate of an audio source emitting an audio signal, in a three-dimensional space, the device comprising:

- a unit (21) for obtaining at least a first signal and a second signal from the audio signal captured in different pointing directions by a first sensor and a second sensor that is spatially offset from said first sensor;
- a deduction unit (22) for deducing, from the first and second captured signals and from directivity functions associated with the first and with the second sensor, an expression of at least a first spatial coordinate of the audio source, said expression containing an uncertainty as to said spatial coordinate;
- a first unit (23) for determining an additional item of information in relation to the first spatial coordinate of the audio source, from a comparison between respective phases or between respective acoustic intensity vector directions of the signals captured by the first and second sensors;
- a second unit (24) for determining said first spatial coordinate of the audio source on the basis of the expression and of the additional item of information,

the first spatial coordinate being a spherical coordinate of azimuth $\theta$, the uncertainty being a sign uncertainty, wherein the first and second sensors are selected from among: cardioid microphones, bidirectional microphones, or sensors integrated into a 1st-order or higher than 1st-order ambisonic microphone.

13. Audio data acquisition system, comprising a microphone unit (30), said microphone unit comprising at least a first sensor (51; 71) and a second sensor (52; 73) that is spatially offset from said first sensor, which sensors are able to capture audio signals in different pointing directions, said system furthermore comprising a data processing device (20) according to Claim 12, wherein the first and second sensors are selected from among: cardioid microphones, bidirectional microphones, or sensors integrated into a 1st-order or higher than 1st-order ambisonic microphone.

14. System according to Claim 13, wherein the first and second sensors are cardioid microphones (51; 52).

15. Telecommunications terminal comprising a system according to Claim 13.

FIG. 1

FIG. 2

FIG. 3

FIG. 4

**FIG. 5**

**FIG. 6**

OBT1 — 60

WIN — 61

FF — 62

DIR — 63

DEL — 64

RES — 65

FIG. 7a

FIG. 7b

80 — OBT2

81 — WIN

82 — FF

83 — DIR

84 — INT

85 — RES

# FIG. 8

**EP 2 920 979 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4042779 A

### Littérature non-brevet citée dans la description

- **JOAN MOUBA et al.** A SOURCE LOCALIZATION/SEPARATION/RESPATIALIZATION SYSTEM BASED ON UNSUPERVISED CLASSIFICATION OF INTERAURAL CUES. *Proc. of the 9th Int. Conférence on Digital Audio Effects,* 18 Septembre 2006
- **J. DANIEL.** Représentation de champs acoustiques, application à la transmission et à la reproduction de scènes sonores complexes dans un contexte multimédia. Université Paris 6, 2001
- **V. PULKKI.** Directional audio coding in spatial sound reproduction and stereo upmixing. *Proc. of the AES 28th Int. Conf,* 2006
- **N. BARRETT ; S. BERGE.** A new method for B-format to binaural transcoding. *40th AES International conférence,* 2010, 8-10